(19) Europäisches Patentamt
European Patent Office
Office européen des brevets

(11) **EP 4 810 579 A1**

(12) **EUROPEAN PATENT APPLICATION**
published in accordance with Art. 153(4) EPC

(43) Date of publication:
**23.09.2026 Bulletin 2026/39**

(21) Application number: **24891143.0**

(22) Date of filing: **16.10.2024**

(51) International Patent Classification (IPC):
***C09D 133/00*** *(2006.01)* ***B05D 1/36*** *(2006.01)*
***B05D 5/00*** *(2006.01)* ***B05D 7/24*** *(2006.01)*
***C09D 5/02*** *(2006.01)* ***C09D 5/16*** *(2006.01)*
***C09D 7/20*** *(2018.01)* ***C09D 109/00*** *(2006.01)*
***C09D 163/00*** *(2006.01)*

(52) Cooperative Patent Classification (CPC):
**B05D 1/36; B05D 5/00; B05D 7/24; C09D 5/02; C09D 5/16; C09D 7/20; C09D 109/00; C09D 133/00; C09D 163/00**

(86) International application number:
**PCT/JP2024/036859**

(87) International publication number:
**WO 2025/105101 (22.05.2025 Gazette 2025/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.11.2023 JP 2023192848**

(71) Applicant: **Chugoku Marine Paints, Ltd.**
**Hiroshima 739-0652 (JP)**

(72) Inventors:
- **YAMANE, Kiwamu**
  **Otake-shi, Hiroshima 739-0652 (JP)**
- **URANO, Kazuki**
  **Otake-shi, Hiroshima 739-0652 (JP)**
- **SHIMIZU, Akino**
  **Otake-shi, Hiroshima 739-0652 (JP)**

(74) Representative: **Hoffmann Eitle**
**Patent- und Rechtsanwälte PartmbB**
**Arabellastraße 30**
**81925 München (DE)**

# (54) AQUEOUS COATING COMPOSITION

(57) A waterborne coating composition containing: synthetic resin particles (A); an organic solvent (B) having an aqueous solubility of more than or equal to 1.0 (g/100 g of water) and a boiling point of higher than or equal to 200°C; and water, wherein a content ratio of the organic solvent (B) in the composition is 1 to 16% by mass, and the composition is a composition for application to a surface of a (meth)acrylic resin-based coating film.

EP 4 810 579 A1

## Description

### Technical Field

The present disclosure relates to a waterborne coating composition.

### Background Art

A wide variety of aquatic organisms are likely to adhere to the surface of a substrate that is in contact with water for a long period of time in a natural environment. Examples of aquatic organisms include animals such as oysters, mussels, and barnacles, plants such as laver and sea lettuce, and bacteria.

Various problems may occur when aquatic organisms adhere to the surface of the substrate. When the substrate is a hull outer plate of a ship, the resistance due to the water flow increases due to the adhesion of the aquatic organisms, so that the ship speed may decrease and the fuel efficiency may deteriorate. When the substrate is an underwater structure, an anticorrosive coating film formed on the surface of the substrate may be damaged by aquatic organisms, the strength and function of the substrate may be deteriorated, and the product life may be shortened. When the substrate is a water supply/discharge pipe of sea water in various facilities, the water supply/discharge pipe is blocked by the aquatic organisms, and the flow velocity may be reduced. When the substrate is a fishing net, the mesh is blocked by aquatic organisms, and problems such as death due to oxygen deficiency of cultured organisms and captured organisms may occur.

In order to suppress adhesion of aquatic organisms to the surface of a substrate, a (meth)acrylic resin-based antifouling coating film has been formed on the substrate (see, for example, Patent Literature 1). The (meth)acrylic resin-based antifouling coating film contains a (meth)acrylic resin and, if desired, an antifouling agent. For example, in a certain antifouling coating film, the (meth)acrylic resin in the antifouling coating film gradually elutes into water, so that appropriate renewal of the coating film surface occurs, and antifouling properties are exhibited. For example, the antifouling agent in the antifouling coating film gradually elutes into water to exhibit antifouling properties. When the (meth)acrylic resin-based antifouling coating film present on the substrate is, for example, consumed, worn, or peeled, the antifouling coating film may be repaired in order to continuously suppress adhesion of aquatic organisms to the surface of the substrate for a long period of time.

In addition, a (meth)acrylic resin-based topcoat coating film is formed on a substrate such as an outboard portion, a deck and a superstructure of a ship, or a bridge (see, for example, Patent Literature 2). However, such a (meth)acrylic resin-based topcoat coating film has a problem that coating film deterioration (coating film defect) such as blisters or cracks is likely to occur. Thus, when deterioration occurs in the (meth)acrylic resin-based topcoat coating film present on the substrate, it is required to repair the topcoat coating film.

### Citation List

#### Patent Literature

Patent Literature 1: JP S56-73578 A
Patent Literature 2: JP S52-3631 A

### Summary of Invention

#### Technical Problem

In repairing the (meth)acrylic resin-based coating film on the substrate, the work of removing the coating film is costly. Thus, it is desirable to apply a new coating material (for example, antifouling coating material and topcoat coating material) to the surface of the coating film to form a new coating film on the coating film as a repair coating. However, the adhesion (adhesiveness) between the coating films may not be sufficient.

The present inventors have studied providing a binder layer between the coating films from the viewpoint of improving adhesion between the coating films. In addition, for the purpose of considering the natural environment and the coating work environment, emission regulations of organic solvents have been strengthened in recent years. For this reason, in the field of coating compositions, a waterborne coating composition having a small content of an organic compound having high volatility at room temperature is required. However, the present inventors have found that when a waterborne coating composition is applied to the surface of the coating film to form a binder layer, adhesion between the

coating film and the binder layer may not be sufficient.

An object of the present disclosure is to provide a waterborne coating composition capable of forming a binder layer excellent in adhesion to a (meth)acrylic resin-based coating film.

Solution to Problem

One aspect of a waterborne coating composition of the present disclosure is a waterborne coating composition containing: synthetic resin particles (A); an organic solvent (B) having an aqueous solubility of more than or equal to 1.0 (g/100 g of water) and a boiling point of higher than or equal to 200°C; and water, wherein a content ratio of the organic solvent (B) in the composition is 1 to 16% by mass, and the composition is a composition for application to a surface of a (meth)acrylic resin-based coating film.

Advantageous Effects of Invention

According to the present disclosure, a waterborne coating composition capable of forming a binder layer excellent in adhesion to a (meth)acrylic resin-based coating film can be provided.

Brief Description of Drawings

Fig. 1 is a schematic cross-sectional view of a laminated coating film according to one embodiment.
Fig. 2 is a schematic cross-sectional view of a substrate with a laminated coating film according to one embodiment.

Description of Embodiments

Hereinafter, an embodiment of the present disclosure will be described in detail.

One kind or two or more kinds of each component described in the present specification can be used.

In the present specification, a homopolymer and a copolymer may be described as a "polymer" without being particularly distinguished. That is, the term "polymer" is used to mean a homopolymer or a copolymer.

"(Meth)acrylate" is a generic term for acrylate and methacrylate, and may be acrylate or methacrylate. "(Meth) acryl" is a generic term for acryl and methacryl, and may be acryl or methacryl. "(Meth)acrylic acid" is a generic term for acrylic acid and methacrylic acid, and may be acrylic acid or methacrylic acid. The same applies to other examples.

In the present specification, the term "old coating film" is a coating film that has been formed on a substrate and encompasses not only a coating film that has been deteriorated due to factors such as aging or use (for example, by wear, abrasion, peeling, blistering, or cracking) after formation of the coating film, but also a coating film that has not been deteriorated. The old coating film may be, for example, an old antifouling coating film or an old topcoat coating film. The old coating film may have, for example, a single layer structure or a laminated structure of two or more layers.

In the present specification, the term "old antifouling coating film" is an antifouling coating film that has been formed on a substrate and encompasses not only an antifouling coating film that has been in contact with water such as sea water or fresh water for a certain period of time (for example, an antifouling coating film after being immersed in water such as ocean, river, or lake for a certain period of time), but also an antifouling coating film before the contact and a non-immersed antifouling coating film. In the present specification, the term "old topcoat coating film" is a topcoat coating film that has been formed on a substrate and encompasses not only a topcoat coating film that has been deteriorated due to factors such as aging or use after formation of the coating film, but also a topcoat coating film that has not been deteriorated.

In the present specification, the "new coating film" refers to a coating film newly formed on the old coating film (for example, a binder layer to be described later is interposed therebetween). Examples of the case of forming a new coating film on an old coating film include the case of forming a new coating film on a deteriorated coating film, and the case of forming a new coating film on a coating film that is not deteriorated when the coating film is erroneously formed or the coating film different from a design is formed. The new coating film may be, for example, a new antifouling coating film or a new topcoat coating film. The new coating film may have, for example, a single layer structure or a laminated structure of two or more layers.

In the present specification, the numerical range n1 to n2 means a numerical range of n1 or more and n2 or less when $n1 < n2$, and n2 or more and n1 or less when $n1 > n2$. In the present specification, when a plurality of lower limit values and a plurality of upper limit values are described for a certain element, a numerical range obtained by combining a value optionally selected from the described lower limit values and a value optionally selected from the described upper limit values is also assumed to be described.

[Waterborne Coating Composition]

The waterborne coating composition of the present disclosure (hereinafter also referred to as "composition of the present disclosure") contains:

synthetic resin particles (A);
an organic solvent (B) having an aqueous solubility of more than or equal to 1.0 (g/100 g of water) and a boiling point of higher than or equal to 200°C; and
water.

<Synthetic Resin Particles (A)>

The composition of the present disclosure contains synthetic resin particles (A).
The synthetic resin particles (A) may be any synthetic resin particles other than the rubber component (C) described below, and examples thereof include (meth)acrylic resin particles, epoxy resin particles, polyester resin particles, polyurethane resin particles, polyamide resin particles, polyether resin particles, polyolefin resin particles, polystyrene resin particles, vinyl acetate resin particles, vinyl chloride resin particles, polyvinyl alcohol resin particles, polyvinyl ester resin particles, and fluororesin particles. Among them, (meth)acrylic resin particles and epoxy resin particles are preferable, and (meth)acrylic resin particles are more preferable. A composition containing at least one kind of particles selected from (meth)acrylic resin particles and epoxy resin particles tends to form a coating film having high adhesion to an old coating film.
The (meth)acrylic resin particles are composed of a (meth)acrylic resin.
The (meth)acrylic resin includes a structural unit derived from a (meth)acrylic monomer, and may further include a structural unit derived from an additional ethylenically unsaturated monomer copolymerizable with the (meth)acrylic monomer. The (meth)acrylic resin may be a homopolymer of a (meth)acrylic monomer, a copolymer of two or more kinds of (meth)acrylic monomers, or a copolymer of a (meth)acrylic monomer and the additional ethylenically unsaturated monomer. The copolymer may be, for example, a random copolymer or a block copolymer. The (meth)acrylic resin may include two or more kinds of structural units derived from a (meth)acrylic monomer. The (meth)acrylic resin may include one kind or two or more kinds of structural units derived from the additional ethylenically unsaturated monomer.
Examples of the (meth)acrylic monomer include (meth)acrylic acid ester, (meth)acrylic acid amide, (meth) acrylonitrile, and (meth)acrylic acid.
Examples of the (meth)acrylic acid ester include: alkyl (meth)acrylates such as methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, n-hexyl (meth)acrylate, 2-ethylhexyl (meth)acrylate, and lauryl (meth)acrylate; cycloalkyl (meth)acrylates such as cyclohexyl (meth)acrylate; aryl (meth)acrylates such as phenyl (meth)acrylate; aralkyl (meth)acrylates such as benzyl (meth)acrylate; hydroxyalkyl (meth)acrylates such as 2-hydroxyethyl (meth)acrylate, 2-hydroxypropyl (meth) acrylate, 3-hydroxypropyl (meth)acrylate, and 4-hydroxybutyl (meth)acrylate; epoxy group-containing (meth)acrylates such as glycidyl (meth)acrylate; aminoalkyl (meth)acrylates such as aminoethyl (meth)acrylate, dimethylaminoethyl (meth)acrylate, and butylaminoethyl (meth)acrylate; and alkoxysilyl group-containing (meth)acrylates such as trimethoxysilylpropyl (meth)acrylate, triethoxysilylpropyl (meth)acrylate, tributoxysilylpropyl (meth)acrylate, dimethoxymethylsilylpropyl (meth)acrylate, and methoxydimethylsilylpropyl (meth)acrylate.
Examples of the (meth)acrylic acid amide include: (meth)acrylic acid aminoalkylamides such as aminoethyl (meth)acrylamide, dimethylaminomethyl (meth)acrylamide, and methylaminopropyl (meth)acrylamide; and other amide group-containing (meth)acrylic monomers such as (meth)acrylamide, N,N-dimethyl(meth)acrylamide, N,N-diethyl(meth) acrylamide, N-methylol(meth)acrylamide, methoxybutyl(meth)acrylamide, and diacetone(meth)acrylamide.
Examples of the additional ethylenically unsaturated monomer copolymerizable with the (meth)acrylic monomer include: $\alpha$-olefins such as ethylene, propylene, and 1-butene; conjugated dienes such as 1,3-butadiene, isoprene, and chloroprene; styrene-based monomers such as styrene, $\alpha$-methylstyrene, and halogenated styrene; vinyl esters such as vinyl acetate and vinyl propionate; unsaturated monocarboxylic acids such as crotonic acid; unsaturated dicarboxylic acids such as maleic acid, fumaric acid, and itaconic acid; monoesters of unsaturated dicarboxylic acids such as ethyl maleate and butyl maleate; diesters of unsaturated dicarboxylic acids such as diethyl maleate and dibutyl maleate; and alkoxysilyl group-containing ethylenically unsaturated monomers such as vinyltrimethoxysilane, vinyltriethoxysilane, vinyldimethoxymethylsilane, vinylmethoxydimethylsilane, and vinyltris($\beta$-methoxyethoxy)silane.
In the (meth)acrylic resin, the content ratio of the structural unit derived from the (meth)acrylic monomer based on 100% by mass of the total structural units derived from a polymerizable monomer is preferably 20% by mass or more, more preferably 30% by mass or more, still more preferably 40% by mass or more, further preferably 50% by mass or more, and particularly preferably 60% by mass or more. In the present specification, the content ratio of each structural unit is measured by nuclear magnetic resonance spectroscopy (NMR).

In the (meth)acrylic resin, the content ratio of a structural unit derived from the additional ethylenically unsaturated monomer based on 100% by mass of the total structural units derived from a polymerizable monomer is preferably 80% by mass or less, more preferably 70% by mass or less, still more preferably 60% by mass or less, further preferably 50% by mass or less, and particularly preferably 40% by mass or less.

Examples of the (meth)acrylic resin include a polymer of a (meth)acrylic monomer, which is a homopolymer or a copolymer of a (meth)acrylic monomer, a copolymer of a (meth)acrylic monomer and a styrene-based monomer, and a copolymer of a (meth)acrylic monomer and a vinyl ester. The (meth)acrylic resin may be, for example, a silicone-modified product or a urethane-modified product.

The (meth)acrylic resin may be a self-crosslinking type or a non-self-crosslinking type.

The glass transition temperature (Tg) of the (meth)acrylic resin is preferably 0°C or higher, more preferably 5°C or higher, still more preferably 10°C or higher, and preferably 70°C or lower, more preferably 60°C or lower, still more preferably 50°C or lower, and, for example, 0 to 70°C. A composition containing a (meth)acrylic resin having a Tg of the lower limit value or higher tends to be able to form a coating film excellent in strength and water resistance. A composition containing a (meth)acrylic resin having a Tg of the upper limit value or lower tends to be able to form a coating film excellent in adhesion to an object to be coated. In the present specification, Tg is a midpoint glass transition temperature obtained by differential scanning calorimetry (DSC) in accordance with JIS K7121:2012.

The (meth)acrylic resin may have an acid value of more than 0 mgKOH/g. The acid value (unit: mgKOH/g) of the (meth)acrylic resin is preferably 1 or more, more preferably 5 or more, still more preferably 10 or more, and preferably 35 or less, more preferably 30 or less, still more preferably 25 or less, and, for example, 1 to 35. The (meth)acrylic resin having an acid value of the lower limit value or more tends to be excellent in stability in the waterborne coating composition. A composition containing a (meth)acrylic resin having an acid value of the upper limit value or less tends to be able to form a coating film excellent in water resistance. In the present specification, the acid value is the amount (mg) of potassium hydroxide necessary for neutralizing an acid group such as a carboxy group per 1 g of non-volatile content of the sample, and is measured in accordance with JIS K0070:1992.

Examples of the method for synthesizing the (meth)acrylic resin include known methods, and examples thereof include a method in which a polymerizable monomer is polymerized by a solution polymerization method, a suspension polymerization method, a bulk polymerization method, or an emulsion polymerization method in the presence of a radical polymerization initiator.

When the waterborne coating composition containing (meth)acrylic resin particles is prepared, for example, an emulsion containing (meth)acrylic resin particles as described later may be used. The emulsion containing (meth)acrylic resin particles may be obtained by emulsifying a (meth)acrylic resin prepared by a polymerization method (for example, the solution polymerization method) other than the emulsion polymerization method, using an emulsifier as necessary, or may be an emulsion prepared by the emulsion polymerization method. The emulsifier used in the emulsion polymerization method may be a reactive emulsifier containing a group copolymerizable with the (meth)acrylic monomer, or may be a non-reactive emulsifier not containing such a group.

The epoxy resin particles are composed of an epoxy resin. Examples of the epoxy resin include a bisphenol A type epoxy resin, a bisphenol F type epoxy resin, a novolac-type epoxy resin (for example, phenol novolac-type epoxy resin and cresol novolac-type epoxy resin), an alicyclic epoxy resin, and an aliphatically modified epoxy resin.

The epoxy resin is a resin containing at least two epoxy groups in one molecule. The epoxy equivalent of the epoxy resin is preferably 50 g/mol or more, more preferably 75 g/mol or more, still more preferably 100 g/mol or more, and is preferably 5,000 g/mol or less, more preferably 2,500 g/mol or less, still more preferably 1,000 g/mol or less, and, for example, 50 to 5,000 g/mol in terms of a non-volatile content. In the present specification, the epoxy equivalent is calculated by the method described in JIS K7236:2009.

When the waterborne coating composition contains epoxy resin particles as the synthetic resin particles (A), the composition preferably further contains a curing agent for epoxy resin. The curing agent for epoxy resin is preferably a polyamine.

A polyamine is a water-soluble or water-dispersible compound containing at least two amino groups in one molecule. The polyamine can be used, for example, in the form of an aqueous solution containing a polyamine or an aqueous dispersion containing a polyamine. Examples of the polyamine include aliphatic polyamines such as ethylenediamine, trimethylenediamine, tetramethylenediamine, pentamethylenediamine, triaminopropane, diethylenetriamine, triethylenetetramine, tetraethylenepentamine, isophoronediamine, and 1,3-bisaminomethylcyclohexane; aromatic polyamines such as phenylenediamine, meta-xylylenediamine, para-xylylenediamine, and diaminodiphenylmethane; other polyamines such as polyoxyethylenediamine, polyoxypropylenediamine, triethyleneglycol diamine, and tripropyleneglycol diamine; and modified polyamines obtained by modifying these polyamines by a known method. Examples of modifications include amidation, Mannich reaction, and epoxy adduct formation, for example.

The amount of the polyamine used is, for example, an amount in which active hydrogen of the polyamine is preferably 0.1 to 1.5 equivalents, more preferably 0.2 to 1.3 equivalents, and still more preferably 0.3 to 1.0 equivalents, based on 1 equivalent of epoxy group in the epoxy resin.

When the epoxy resin particles and the curing agent thereof are used, examples of the storage form of the composition include a two-component type composition including a main agent component containing the epoxy resin particles and a curing agent component containing a curing agent such as polyamine.

The synthetic resin particles (A) are preferably "water-dispersible" particles that can be dispersed in water. When the synthetic resin particles (A) are (meth)acrylic resin particles, the (meth)acrylic resin constituting the particles may contain, for example, a hydrophilic group such as a carboxy group and a hydroxy group.

The synthetic resin particles (A) are usually present in the form of particles in the composition. For example, during the coating and drying of the composition, water evaporates and the particles are bound to each other to form a film. The Z-average particle diameter of the synthetic resin particles (A) is preferably 10 nm or more, more preferably 20 nm or more, still more preferably 30 nm or more, and particularly preferably 50 nm or more, and is preferably 2 μm or less, more preferably 1 μm or less, still more preferably 500 nm or less, and particularly preferably 300 nm or less, and, for example, 10 nm to 2 μm. The synthetic resin particles (A) having a Z-average particle diameter within the above range tend to be able to be stably present in the waterborne coating composition, and such a composition tends to be able to form a coating film having uniform coating film properties. In the present specification, the Z-average particle diameter is measured at 23°C by a dynamic light scattering method (DLS) using a particle diameter measuring apparatus (for example, Zetasizer Nano-ZS manufactured by Malvern Panalytical Ltd.).

When the composition of the present disclosure is produced, it is preferable to use a waterborne dispersion in which the synthetic resin particles (A) are dispersed in a dispersion medium containing water (hereinafter, also referred to as a "waterborne medium") and mix the waterborne dispersion with other constituent components. As a result, the synthetic resin particles (A) tend to be stably and uniformly present in the composition of the present disclosure, and such a composition tends to be able to form a coating film having uniform coating film properties. The waterborne dispersion is preferably an emulsion. The content ratio of the synthetic resin particles (A) in the waterborne dispersion is preferably 20% by mass or more, more preferably 30% by mass or more, and preferably 70% by mass or less, more preferably 60% by mass or less, and, for example, 20 to 70% by mass.

The waterborne medium is not particularly limited as long as it contains water, and the content ratio of water in the waterborne medium is preferably 50% by mass or more, more preferably 60% by mass or more, still more preferably 70% by mass or more, further preferably 80% by mass or more, and particularly preferably 90% by mass or more, from the viewpoint of reducing the environmental burden. The waterborne medium may contain a medium other than water, examples of such a medium include acetone, methyl alcohol, ethyl alcohol, n-propyl alcohol, isopropyl alcohol, n-butyl alcohol, isobutyl alcohol, 2-methoxyethanol, 2-ethoxyethanol, 2-butoxyethanol, 1-methoxy-2-propanol, 1-ethoxy-2-propanol, diacetone alcohol, dioxane, ethylene glycol, ethylene glycol dimethyl ether, ethylene glycol diethyl ether, and ethylene glycol monopropyl ether.

The composition of the present disclosure may contain two or more kinds of the synthetic resin particles (A).

The content ratio of the synthetic resin particles (A) in 100% by mass of the non-volatile content of the waterborne coating composition of the present disclosure is preferably 10% by mass or more, more preferably 20% by mass or more, still more preferably 30% by mass or more, and preferably 70% by mass or less, more preferably 60% by mass or less, still more preferably 50% by mass or less, and, for example, 10 to 70% by mass.

<Organic solvent (B)>

The composition of the present disclosure contains an organic solvent (B). The organic solvent (B) has an aqueous solubility of 1.0 (g/100 g of water) or more and a boiling point of 200°C or higher. The organic solvent (B) is a compound that is liquid at 23°C under 1 atm.

Hereinafter, effects of the composition of the present disclosure will be described.

By providing a coating film formed from the composition of the present disclosure as a binder layer between an old coating film and a new coating film, a laminated coating film including an old coating film, a binder layer, and a new coating film in this order and having excellent adhesion between the old coating film and the binder layer can be obtained. The reason for this is not clear, but the present inventors presume as follows.

A (meth)acrylic resin-based coating film as an old coating film present on a substrate is formed from a coating material containing, for example, a (meth)acrylic resin, and has a certain degree of hydrophilicity. When the composition of the present disclosure containing the organic solvent (B) having a certain aqueous solubility or more is applied to the surface of such an old coating film, the composition is well compatible with the surface of the old coating film, and the organic solvent (B) can dissolve the surface of the old coating film, so that a binder layer excellent in adhesion to the old coating film can be formed. Since the organic solvent (B) has a high boiling point, immediate volatilization of the organic solvent (B) at the time of application of the composition is suppressed, and thus the above effect can be sufficiently obtained.

As described above, the composition of the present disclosure is suitable as a coating composition to be applied to the surface of a (meth)acrylic resin-based coating film, for example, as a coating composition for forming a binder layer

for repairing an old coating film, specifically as a coating composition for forming a binder layer provided between an old coating film and a new coating film when repairing the old coating film. The (meth)acrylic resin-based coating film is, for example, an antifouling coating film or a topcoat coating film.

In the present specification, the "(meth)acrylic resin-based coating film" means a coating film formed from a coating material containing a (meth)acrylic resin. The content ratio of the (meth)acrylic resin in the (meth)acrylic resin-based coating film is preferably 5% by mass or more, more preferably 10% by mass or more, and still more preferably 20% by mass or more with respect to 100% by mass of a resin component contained in the (meth)acrylic resin-based coating film. The (meth)acrylic resin-based coating film may have a single-layer structure or a laminated structure of two or more layers.

The coating material for forming the (meth)acrylic resin-based coating film is not particularly limited, and may be, for example, a coating composition prepared based on the description of, for example, JP 2016-180051 A, JP 2018-44162 A, or JP 2019-56064 A, or a commercially available product. The coating material may be either a non-reactive curing type coating material or a reactive curing type coating material.

The composition of the present disclosure is particularly suitable as a coating composition to be applied to the surface of an old antifouling coating film, for example, as a coating composition for forming a binder layer for repairing an old antifouling coating film, specifically as a coating composition for forming a binder layer provided between an old antifouling coating film and a new antifouling coating film when repairing the old antifouling coating film. Hereinafter, the case where the old coating film is an old antifouling coating film will be further described.

In order to suppress adhesion of aquatic organisms to the surface of a substrate, an antifouling coating film is provided on the substrate. As described above, for example, for the purpose of repairing an old antifouling coating film, a new antifouling coating film is provided on the old antifouling coating film. When a new antifouling coating film is directly formed on the surface of an old antifouling coating film, the adhesion between the old antifouling coating film and the new antifouling coating film may not be sufficient. Since the antifouling coating film provided on the ship bottom outer plate is exposed to a submerged environment for a long period of time, the above-mentioned adhesion tends to be particularly required. When a binder layer formed from a conventional waterborne coating composition is provided between an old antifouling coating film and a new antifouling coating film for the purpose of improving adhesion, adhesion between the old antifouling coating film and the binder layer is not sufficient, and in a laminated coating film of the old antifouling coating film and the binder layer, the upper binder layer tends to be easily peeled from the lower old antifouling coating film.

By providing a coating film formed from the composition of the present disclosure as a binder layer between an old antifouling coating film and a new antifouling coating film, a laminated coating film including an old antifouling coating film, a binder layer, and a new antifouling coating film in this order and having excellent adhesion between the old antifouling coating film and the binder layer can be obtained. The reason for this is not clear, but the present inventors presume as follows.

The old antifouling coating film is formed from an antifouling coating material containing a (meth)acrylic resin and, if desired, for example, an antifouling agent, and has a certain degree of hydrophilicity. The old antifouling coating film after being in contact with water such as sea water or fresh water for a certain period includes a fragile surface layer (fragile layer) with fine voids formed by, for example, elution of the (meth)acrylic resin or the antifouling agent into water. When the composition of the present disclosure containing the organic solvent (B) having aqueous solubility of a certain level or more is applied to the surface of such an old antifouling coating film, the composition is well compatible with the surface of the old antifouling coating film, and the organic solvent (B) can dissolve the surface (the fragile layer) of the old antifouling coating film, so that peeling of the binder layer due to cohesive failure in the fragile layer can be suppressed, and thus a binder layer excellent in adhesion to the old antifouling coating film can be formed. Since the organic solvent (B) has a high boiling point, immediate volatilization of the organic solvent (B) at the time of application of the composition is suppressed, and thus the above effect can be sufficiently obtained.

The above reason is a presumption, and does not limit the composition of the present disclosure at all.

The aqueous solubility (unit: g/100 g of water) of the organic solvent (B) is 1.0 or more, preferably 1.5 or more, more preferably 2.0 or more, and still more preferably 2.5 or more. The upper limit of the aqueous solubility of the organic solvent (B) is not particularly limited. The organic solvent (B) may be, for example, a water-miscible organic solvent that can be mixed with water in an arbitrary amount. An organic solvent having an aqueous solubility of less than 1.0 (g/100 g of water) tends not to sufficiently exhibit the above-described effects. The aqueous solubility of the organic solvent (B) represents the maximum amount (g) of the organic solvent dissolved in 100 g of water. The aqueous solubility is measured by the EPA830.7840 flask shaking method under the conditions of 1 atm and 23°C.

The boiling point of the organic solvent (B) is 200°C or higher, preferably 205°C or higher, more preferably 210°C or higher, still more preferably 220°C or higher, and preferably 300°C or lower, more preferably 290°C or lower, still more preferably 280°C or lower, and, for example, 200 to 300°C. An organic solvent having a boiling point of lower than 200°C tends to be easily volatilized at the time of applying the composition, and thus tends not to sufficiently exhibit the above-described effect. The boiling point of the organic solvent (B) is measured at 1 atm.

Examples of the organic solvent (B) include organic solvents which are glycol ethers, glycol acetates, glycols,

alcohols, or esters and have aqueous solubility and boiling point within the above ranges. Among them, glycol ethers are preferable. Examples of the glycol ethers include alkylene glycol monoalkyl ethers, alkylene glycol monoaryl ethers, dialkylene glycol monoalkyl ethers, dialkylene glycol monoaryl ethers, trialkylene glycol monoalkyl ethers, and trialkylene glycol monoaryl ethers. Examples of the "alkylene" in these compounds include an alkylene group having 2 or 3 carbon atoms. Examples of the "alkyl" in these compounds include an alkyl group having 1 to 10 carbon atoms such as a methyl group, an ethyl group, a propyl group, a butyl group, or a hexyl group, preferably an alkyl group having 3 to 10 carbon atoms, more preferably an alkyl group having 3 to 6 carbon atoms, and still more preferably an alkyl group having 3 to 4 carbon atoms, and a linear alkyl group is preferable. Examples of the "aryl" in these compounds include an aryl group having 6 to 10 carbon atoms such as a phenyl group.

The molecular weight of the organic solvent (B) is preferably 350 or less, more preferably 300 or less, still more preferably 250 or less, and preferably 100 or more, and, for example, 100 to 350. The composition containing the organic solvent (B) having a molecular weight of the upper limit value or less tends to more favorably exhibit the above-described effects.

The organic solvent (B) preferably contains a linear alkoxy group having 3 or more carbon atoms at a molecular terminal. The composition containing an organic solvent (B) containing such an alkoxy group tends to more favorably exhibit the above-described effects. The number of carbon atoms of the linear alkoxy group is preferably 3 to 10, more preferably 3 to 6, and still more preferably 3 to 4. It is preferable that the organic solvent (B) does not include a phenyl group because the organic solvent (B) tends to more favorably exhibit the above-described effects.

Examples of the organic solvent (B) include

ethylene glycol monophenyl ether (2.3 g, 245°C),
diethylene glycol monobutyl ether (miscible, 230°C),
diethylene glycol monohexyl ether (1.7 g, 260°C),
propylene glycol monophenyl ether (1.1 g, 242°C),
dipropylene glycol monopropyl ether (18 g, 210°C),
dipropylene glycol monobutyl ether (3 g, 222°C),
tripropylene glycol monomethyl ether (miscible, 241°C),
tripropylene glycol monobutyl ether (3 g, 276°C), and
benzyl alcohol (4 g, 205°C). The value on the left side in the parentheses indicates the amount of the organic solvent dissolved in 100 g of water, and in the case of an organic solvent that can be dissolved and miscible in water in an arbitrary amount, it is described as "miscible". The value on the right side in the parentheses indicates the boiling point of the organic solvent.

The content ratio of the organic solvent (B) in the composition of the present disclosure is 1 to 16% by mass. A coating film (for example, a binder layer) formed from a composition in which the content ratio of the organic solvent (B) is less than 1% by mass tends not to sufficiently exhibit the above-described effects. Since the organic solvent (B) has low volatility, the organic solvent (B) tends to remain in the coating film formed from the composition. In a coating film formed from a composition in which the content ratio of the organic solvent (B) exceeds 16% by mass, the amount of the resin component in the coating film is relatively reduced, and the adhesion with the lower layer (meth)acrylic resin-based coating film tends to be insufficient.

The content ratio of the organic solvent (B) in the composition of the present disclosure is preferably 1% by mass or more, more preferably 2% by mass or more, still more preferably 3% by mass or more, and preferably 16% by mass or less, more preferably 14% by mass or less, still more preferably 13% by mass or less from the viewpoint that the above-described effects are more favorably exhibited.

Since the boiling point of the organic solvent (B) is 200°C or higher, the organic solvent (B) has low volatility at room temperature (23°C). Thus, the composition of the present disclosure containing the organic solvent (B) and being waterborne is a composition having a low environmental burden.

The composition of the present disclosure may contain two or more kinds of organic solvents (B).

The composition of the present disclosure contains water and an organic solvent (B). The content of the organic solvent (B) in the composition is preferably 2 parts by mass or more, more preferably 6 parts by mass or more, still more preferably 8 parts by mass or more, and preferably 55 parts by mass or less, more preferably 45 parts by mass or less, still more preferably 40 parts by mass or less, and, for example, 2 to 55 parts by mass with respect to 100 parts by mass of water from the viewpoint that the above-described effects are more favorably exhibited.

<Rubber component (C)>

The composition of the present disclosure may further contain a rubber component (C). The composition further containing the rubber component (C) tends to be capable of forming, for example, a coating film more excellent in adhesion

to an old coating film or a substrate.

Examples of the rubber component (C) include synthetic rubbers such as styrene-butadiene-based synthetic rubber, (meth)acrylonitrile-butadiene-based synthetic rubber, and isobutylene-based synthetic rubber, and natural rubber.

As the rubber component (C), a rubber component including a structural unit derived from butadiene is preferable, a styrene-butadiene-based synthetic rubber and a (meth)acrylonitrile-butadiene-based synthetic rubber are more preferable, and a styrene-butadiene-based synthetic rubber is still more preferable. The styrene-butadiene-based synthetic rubber is a copolymer rubber including a styrene-derived structural unit and a butadiene (1,3-butadiene)-derived structural unit as main components, that is, these structural units in a range of more than 50% by mass in total. The (meth)acrylonitrile-butadiene-based synthetic rubber is a copolymer rubber containing a (meth)acrylonitrile-derived structural unit and a butadiene (1,3-butadiene)-derived structural unit as main components, that is, these structural units in a range of more than 50% by mass in total.

The rubber component may further include, for example, a structural unit derived from an additional polymerizable monomer. Examples of the additional polymerizable monomers include (meth)acrylic acid; alkyl (meth)acrylates such as methyl (meth)acrylate, ethyl (meth)acrylate, propyl (meth)acrylate, butyl (meth)acrylate, 2-ethylhexyl (meth)acrylate, octyl (meth)acrylate, and lauryl (meth)acrylate; hydroxyalkyl (meth)acrylate such as 2-hydroxyethyl (meth)acrylate; alkoxyalkyl (meth)acrylate such as 2-methoxyethyl (meth)acrylate; epoxy group-containing (meth)acrylate such as glycidyl (meth)acrylate; vinyl cyanide compounds such as (meth)acrylonitrile; (meth)acrylic acid amide such as N-methylol (meth)acrylic acid amide; and aromatic vinyl compounds such as $\alpha$-methylstyrene. The rubber component may include one kind or two or more kinds of structural units derived from the additional polymerizable monomer.

In the rubber component including a structural unit derived from butadiene, the content ratio of the structural unit derived from butadiene in 100% by mass of the total structural units derived from a polymerizable monomer is preferably 10% by mass or more, more preferably 15% by mass or more, still more preferably 20% by mass or more, and particularly preferably 25% by mass or more, and is preferably 95% by mass or less, more preferably 80% by mass or less, still more preferably 70% by mass or less, and particularly preferably 60% by mass or less, and, for example, 10 to 95% by mass.

In the styrene-butadiene-based synthetic rubber, the content ratio of the styrene-derived structural unit in 100% by mass of the total structural units derived from the polymerizable monomer is preferably 5% by mass or more, more preferably 20% by mass or more, still more preferably 30% by mass or more, and particularly preferably 40% by mass or more, and is preferably 90% by mass or less, more preferably 85% by mass or less, still more preferably 80% by mass or less, and particularly preferably 75% by mass or less, and, for example, 5 to 90% by mass.

In the styrene-butadiene-based synthetic rubber, the content ratio of the structural unit derived from the additional polymerizable monomer in 100% by mass of all the structural units derived from the polymerizable monomer is preferably 40% by mass or less, more preferably 30% by mass or less, and still more preferably 20% by mass or less.

The glass transition temperature (Tg) of the rubber component (C) is preferably -40°C or higher, more preferably -30°C or higher, still more preferably -20°C or higher, and preferably 50°C or lower, more preferably 40°C or lower, still more preferably 30°C or lower, and, for example, -40 to 50°C. The composition containing the rubber component (C) having a Tg of the lower limit value or more tends to be able to form a coating film excellent in strength and water resistance. The composition containing the rubber component (C) having a Tg of the upper limit value or less tends to form a coating film excellent in adhesion to an object to be coated.

When a coating film formed from the composition of the present disclosure is, as a binder layer, laminated on an old coating film, the Tg of the rubber component (C) is preferably -30 to 30°C. The composition containing the rubber component (C) having a Tg within the above range tends to be capable of forming a coating film more excellent in adhesion to an old coating film. From the viewpoint of the adhesion, the old coating film is preferably an old antifouling coating film, and more preferably an old hydration-degradable antifouling coating film.

The rubber component (C) may be present in the form of particles in the composition. The Z-average particle diameter of the particles of the rubber component (C) is preferably 10 nm or more, more preferably 20 nm or more, still more preferably 30 nm or more, and particularly preferably 50 nm or more, and is preferably 2 $\mu$m or less, more preferably 1 $\mu$m or less, still more preferably 500 nm or less, and particularly preferably 300 nm or less, and, for example, 10 nm to 2 $\mu$m. Particles of the rubber component (C) having a Z average particle diameter within the above range tend to be able to be stably present in the waterborne coating composition, and such a composition tends to be able to form a coating film having uniform coating film properties.

When the composition of the present disclosure is produced, it is preferable to use a waterborne dispersion in which the rubber component (C) is dispersed in a waterborne medium and mix the waterborne dispersion with other constituent components. As a result, the rubber component (C) tends to be stably and uniformly present in the composition of the present disclosure, which in turn tends to enable the formation of a coating film having uniform coating film properties. The waterborne dispersion is preferably an emulsion. The content ratio of the rubber component (C) in the waterborne dispersion is preferably 20% by mass or more, more preferably 30% by mass or more, and preferably 70% by mass or less, more preferably 60% by mass or less, and, for example, 20 to 70% by mass.

The composition of the present disclosure may contain one kind or two or more kinds of the rubber component (C).

A case where the composition of the present disclosure contains the rubber component (C) will be described. When the total content of the synthetic resin particles (A) and the rubber component (C) is 100 parts by mass, the content of the synthetic resin particles (A) is preferably 60 to 95 parts by mass, more preferably 70 to 95 parts by mass, and still more preferably 70 to 90 parts by mass, and the content of the rubber component (C) is preferably 5 to 40 parts by mass, more preferably 5 to 30 parts by mass, and still more preferably 10 to 30 parts by mass from the viewpoint of the above-mentioned adhesion.

<Additional Components>

The composition of the present disclosure may contain an additional component such as a pigment or an additive as long as the above-described effects are not impaired. Examples of the additive include a dispersant, a wetting agent, an anti-sagging agent (an anti-settling agent, a thixotropic agent, a rheology control agent), an antifoaming agent, a leveling agent, a surfactant, a thickener, an antifungal agent, a preservative, a pH adjuster, an ultraviolet absorber, and an antioxidant.

The composition of the present disclosure may contain one kind or two or more kinds of the additional components.

Examples of the pigment include an extender pigment and a coloring pigment, and any of organic and inorganic pigments may be used. The composition of the present disclosure may contain one kind or two or more kinds of pigments.

Examples of the extender pigment include talc, silica, mica, clay, potassium feldspar, calcium carbonate, kaolin, alumina white, white carbon, aluminum hydroxide, magnesium carbonate, barium carbonate, barium sulfate, zinc oxide, and zinc sulfide. When the composition of the present disclosure contains the extender pigment, the content ratio of the extender pigment is preferably 0.1% by mass or more, more preferably 1% by mass or more, and still more preferably 5% by mass or more, and is preferably 80% by mass or less, more preferably 70% by mass or less, and still more preferably 60% by mass or less, and is, for example, 0.1 to 80% by mass in 100% by mass of the non-volatile content of the composition.

Examples of the coloring pigment include inorganic pigments and organic pigments. Examples of the inorganic pigment include carbon black, red iron oxide, titanium white (titanium oxide), yellow iron oxide, and red iron oxide. Examples of the organic pigment include naphthol red and phthalocyanine blue. When the composition of the present disclosure contains the coloring pigment, the content ratio of the coloring pigment is preferably 0.01% by mass or more, more preferably 0.1% by mass or more, and still more preferably 0.5% by mass or more, and is preferably 40% by mass or less, more preferably 30% by mass or less, and still more preferably 20% by mass or less, and is, for example, 0.01 to 40% by mass in 100% by mass of the non-volatile content of the composition.

The composition of the present disclosure may contain a dispersant from the viewpoint of improving the dispersibility of insoluble components such as pigments, easily forming a coating film having a good appearance, and easily forming a coating film having excellent crack resistance. Examples of the dispersant include polymers including a pigment adsorptive group (pigment affinity group) and including a compatible chain such as fatty acid, polyamino, polyether, polyester, polyurethane, and polyacrylate. Examples of the pigment adsorptive group include a carboxy group, an acid anhydride group, a phosphoric acid group, an amino group, a salt group thereof, and an ammonium salt group. When the composition of the present disclosure contains the dispersant, the content ratio of the dispersant is preferably 0.1% by mass or more and more preferably 0.2% by mass or more, and is preferably 3% by mass or less and more preferably 2% by mass or less, and is, for example, 0.1 to 3% by mass, based on 100% by mass of the non-volatile content of the composition.

The composition of the present disclosure may contain a wetting agent from the viewpoint of, for example, more easily spreading the composition on the surface of an object to be coated. Examples of the wetting agent include an acetylene diol-based wetting agent, a silicone-based wetting agent, a (meth)acrylic wetting agent, a vinyl-based wetting agent, and a fluorine-based wetting agent. When the composition of the present disclosure contains the wetting agent, the content ratio of the wetting agent is preferably 0.1% by mass or more and more preferably 0.2% by mass or more, and is preferably 3% by mass or less and more preferably 2% by mass or less, and is, for example, 0.01 to 3% by mass, based on 100% by mass of the non-volatile content of the composition.

The composition of the present disclosure may contain an anti-sagging agent from the viewpoint of improving thickness-coating properties and anti-sagging properties at the time of coating and suppressing sedimentation of insoluble components such as pigments in water. Examples of the anti-sagging agent include organic thixotropic agents such as hydrogenated castor oil-based thixotropic agents, amide wax-based thixotropic agents, oxidized polyethylene-based thixotropic agents, and urethane-based thixotropic agents; and inorganic thixotropic agents such as clay minerals (for example, bentonite, smectite, and hectorite) and synthetic fine silica. When the composition of the present disclosure contains the anti-sagging agent, the content ratio of the anti-sagging agent is preferably 0.01% by mass or more and more

preferably 0.05% by mass or more, and is preferably 3% by mass or less and more preferably 2% by mass or less, and is, for example, 0.01 to 3% by mass, based on 100% by mass of the non-volatile content of the composition.

The antifoaming agent is preferably a material capable of suppressing generation of bubbles during the production and coating of the composition or a material capable of breaking bubbles generated in the composition. By using the antifoaming agent, generation of air bubble marks or pinholes in the coating film can be suppressed, for example, and thus the film formability and crack resistance of the coating film can be further improved. Examples of the antifoaming agent include silicone-based antifoaming agents, polymer-based (non-silicone-based) antifoaming agents, and mineral oil-based antifoaming agents. When the composition of the present disclosure contains the antifoaming agent, the content ratio of the antifoaming agent is preferably 0.05% by mass or more and more preferably 0.1% by mass or more, and is preferably 5% by mass or less and more preferably 3% by mass or less, and is, for example, 0.05 to 5% by mass, based on 100% by mass of the non-volatile content of the composition.

As the thickener, for example, a commercially available product generally sold as a thickener can be used. Examples of the thickener include thickeners of alkali thickening type, nonionic association type, acrylic type, urethane type, water-soluble polymer type, or polyamide type, and cellulose-based thickeners such as hydroxyethyl cellulose. When the composition of the present disclosure contains the thickener, the content ratio of the thickener is preferably 0.01% by mass or more and more preferably 0.1% by mass or more, and is preferably 5% by mass or less and more preferably 1% by mass or less, and is, for example, 0.01 to 5% by mass, based on 100% by mass of the non-volatile content of the composition.

In the composition of the present disclosure, the content ratio of an organic solvent other than the organic solvent (B) having an aqueous solubility of 1.0 (g/100 g of water) or more and a boiling point of 200°C or higher is preferably 5% by mass or less, more preferably 3% by mass or less, and still more preferably 1% by mass or less.

<Water>

The composition of the present disclosure is a waterborne coating composition. In the present disclosure, the "waterborne" coating composition refers to a coating composition containing water. Examples of the water include tap water, ion-exchanged water, and deionized water, and ion-exchanged water and deionized water are preferable. Examples of the water include water contained in the waterborne dispersion of the synthetic resin particles (A), water contained in the waterborne dispersion of the rubber component (C), and water contained in the additive.

The content ratio of the water in the composition of the present disclosure is preferably 20% by mass or more, more preferably 25% by mass or more, and still more preferably 30% by mass or more, and is preferably 60% by mass or less, more preferably 55% by mass or less, and still more preferably 50% by mass or less, and is, for example, 20 to 60% by mass. The content ratio of the water is measured using a moisture measuring apparatus (for example, CA-310 manufactured by Nittoseiko Analytech Co., Ltd.) according to the Karl Fischer method.

The content ratio of the non-volatile content in the composition of the present disclosure is preferably 25% by mass or more, more preferably 30% by mass or more, and still more preferably 35% by mass or more, and is preferably 75% by mass or less, more preferably 70% by mass or less, and still more preferably 65% by mass or less, and is, for example, 25 to 75% by mass, from the viewpoint that a composition excellent in coating workability can be formed. The content ratio of the non-volatile content is measured by the method described in the Examples section.

<VOC>

The content of a volatile organic compound (VOC) in the composition of the present disclosure is preferably 150 g/L or less and more preferably 100 g/L or less, from the viewpoint of, for example, consideration for the natural environment and the coating work environment. The VOC content in the composition of the present disclosure is preferably as low as possible, but the content may be, for example, 1 g/L or more, 5 g/L or more, 10 g/L or more, 20 g/L or more, or 30 g/L or more. The VOC content in the composition of the present disclosure may be, for example, 1 to 150 g/L.

The content of VOC in the composition of the present disclosure is calculated based on the following formula (1) using the values of the composition specific gravity, the non-volatile content concentration, and the moisture concentration described below, respectively.

VOC content (g/L) = specific gravity of composition × 1000 × (100 - non-volatile content concentration - moisture concentration)/100 (1)

The composition specific gravity (g/mL) is a value calculated by filling a specific gravity cup having an internal volume of 100 mL with the composition under a temperature condition of 23°C and measuring the mass of the composition.

The non-volatile content concentration (% by mass) is a value calculated by a method described in the Examples section. The non-volatile content of the composition means a heating residue when the composition is dried in a thermostatic chamber at 108°C for 3 hours, as described in the Examples section to be described later.

The moisture concentration (% by mass) is the amount (% by mass) of water contained in 100% by mass of the composition, and is measured using a moisture measuring apparatus (for example, CA-310, manufactured by Nittoseiko Analytech Co., Ltd.) according to the Karl Fischer method.

<Method for producing composition>

The composition of the present disclosure can be produced by appropriately using a known method. For example, the respective components described above are charged into a stirring container at once or in an arbitrary order, the respective components are mixed by a known stirring or mixing means, and dispersed or dissolved in water, whereby a composition can be produced. In the mixing, a waterborne dispersion in which the synthetic resin particles (A) are dispersed in a waterborne medium may be used, or a waterborne dispersion in which the rubber component (C) is dispersed in a waterborne medium may be used.

Examples of the stirring or mixing means include means using a paint shaker, a high speed disperser, a sand grinding mill, a basket mill, a ball mill, a three-roll mill, a Ross mixer, or a planetary mixer. The mixing (kneading) may be performed while heating or cooling according to, for example, the season and the environment.

The composition of the present disclosure is a waterborne coating composition, thus having extremely little adverse effects on the environment and the human body and being excellent in storage stability. A coating film formed from the composition of the present disclosure is excellent in adhesion to an object to be coated such as an old coating film or a substrate and adhesion to a new coating film provided on the coating film, and peeling hardly occurs.

The composition of the present disclosure may be a one-component type composition containing the above components, or a multi-component type composition such as a two-component type composition. For example, when the synthetic resin particles (A) are (meth)acrylic resin particles, a one-component type composition is preferable. For example, when the synthetic resin particles (A) are epoxy resin particles, a two-component type composition is preferable.

In the case of a multi-component type composition, the respective components constituting the composition are typically, for example, stored, preserved, or transported in separate containers, and mixed together and used immediately before use.

[Use of Composition, Laminated Coating Film, Substrate with Laminated Coating Film, and Method for Producing Same]

The composition of the present disclosure is applied to, for example, an object to be coated. The object to be coated refers to an article to which the composition of the present disclosure is applied. Examples of the material of the surface of the object to be coated to which the composition is applied include a resin coating film, a metal material, wood, plastic, fiber-reinforced plastic (FRP), rubber, stone material, concrete, mortar, glass, porcelain, ceramics, and a composite thereof. Examples of the resin coating film include an antifouling coating film, an undercoat coating film, an intermediate coating film, a topcoat coating film, and a resin coating film to be repaired (for example, an old antifouling coating film and an old topcoat coating film). Examples of the metal material include ferrous metal (such as iron, steel, ferroalloys, carbon steel, mild steel, and alloy steel), non-ferrous metal (such as zinc, aluminum, copper, brass, galvanized steel, and zinc thermal-sprayed metals), and stainless steel (such as SUS304 and SUS410).

The object to be coated is, for example, a substrate.

The object to be coated may include, for example, a substrate and a resin coating film provided on the substrate. The resin coating film may be, for example, an old antifouling coating film or an old topcoat coating film. The resin coating film may be, for example, a (meth)acrylic resin-based coating film. Examples of the material of the substrate at the portion where the resin coating film is provided include metal materials, wood, plastic, fiber-reinforced plastic (FRP), rubber, stone materials, concrete, mortar, glass, porcelain, ceramics, and composites thereof, and metal materials are preferable.

Examples of the substrate include a hull outer plate, a deck and a superstructure of a ship, an underwater structure, a water supply/discharge pipe of sea water or fresh water in various facilities, a fishing material, and other marine materials. In addition, a land-based structure may also be used as a substrate. Examples of the ship include a large steel ship such as a container ship or a tanker, a fishing boat, an FRP ship, a wooden ship, a yacht, a motor boat, and a personal watercraft. Examples of the hull outer plate include a ship bottom outer plate and an outboard portion. Examples of the underwater structure include oil pipelines, water conduit pipes, circulating water pipes, water supply/discharge ports in various facilities, submarine cables, sea water utilization equipment (for example, sea water pumps), and various underwater civil engineering structures in, for example, megafloats, coastal roads, undersea tunnels, port facilities, offshore wind power generation facilities, and canals and water channels. Examples of the above facilities include a factory, a thermal power plant, and a nuclear power plant. Examples of the fishing material include ropes, fishing gears,

fishing nets, floats, and buoys. Other marine materials include, for example, swimsuits, diver suits, underwater glasses, oxygen cylinders, and torpedoes. Examples of the land-based structure include a bridge, a steel tower, and a chimney in, for example, a waste incinerator, a power plant, and a factory.

When the composition of the present disclosure is applied to the surface of the antifouling coating film, the substrate is preferably a ship bottom outer plate, an underwater structure, and a fishing material, and more preferably a ship bottom outer plate. When the composition of the present disclosure is applied to the surface of the topcoat coating film, the substrate is preferably an outboard portion, a deck and a superstructure of a ship, an underwater structure, and a land-based structure.

In order to remove, for example, rust, oil and fat, moisture, dust, and salt on the substrate, and in order to improve adhesion between the substrate and the coating film, the substrate surface may be treated (for example, by blasting treatment (ISO8501-1 Sa2 1/2) or treatment for removing oil and dust by degreasing) as necessary. A primer such as an anti-rust coating material may be applied to the surface of the substrate for the purpose of primary rust prevention. Examples of the anti-rust coating material include a zinc-based shop primer, an epoxy resin-based zinc rich primer, and an epoxy resin-based anticorrosive coating material.

The thickness (dry film thickness) of the coating film or the binder layer formed from the composition of the present disclosure is preferably 10 μm or more, more preferably 15 μm or more, still more preferably 20 μm or more, and preferably 500 μm or less, more preferably 400 μm or less, still more preferably 300 μm or less, and, for example, 10 to 500 μm. The composition may be applied multiple times to form a coating film having a desired thickness. A coating film having a desired thickness may be formed by a single application (one coat), or by two or more applications (two or more coats).

A coating film (for example, a binder layer) can be formed by applying the composition of the present disclosure to an object to be coated and drying the composition. Examples of the application method include spray coating such as airless spray coating and air spray coating, brush coating, and roller coating. Drying of the composition of the present disclosure may be performed by natural drying or by heat drying. In the case of natural drying, the drying time for obtaining a dry coating film is preferably 1 hour or more, more preferably 1 day or more, and still more preferably 5 days or more. In the case of heat drying, a hot air dryer may be used. In the case of heat drying, the drying time for obtaining a dry coating film is, for example, 5 minutes to 60 minutes, and the drying temperature is preferably 30°C or higher and lower than 100°C, and more preferably 40 to 80°C.

The composition of the present disclosure can be used, for example, as a waterborne coating composition for forming a binder layer for an antifouling coating film or a topcoat coating film, that is, as a binder coating material for an antifouling coating film or a topcoat coating film. The binder layer for an antifouling coating film or a topcoat coating film is a layer for improving adhesion of a newly formed antifouling coating film or topcoat coating film to an object to be coated. The binder coating material for an antifouling coating film or a topcoat coating film is a coating material applied to an object to be coated before an antifouling coating material or a topcoat coating material is applied.

In one embodiment, an antifouling substrate includes a substrate, a coating film (binder layer) formed from the composition of the present disclosure, and an antifouling coating film, in this order. Another layer such as an anticorrosive coating film may be provided between the substrate and the coating film (binder layer). In one embodiment, a substrate with a topcoat coating film includes a substrate, an undercoating film, an intermediate coating film as necessary, a coating film (binder layer) formed from the composition of the present disclosure, and a topcoat coating film, in this order.

A laminated coating film as an example of the use of the composition of the present disclosure will be described.

In one embodiment, the laminated coating film includes a first (meth)acrylic resin-based coating film, a binder layer formed from the composition of the present disclosure, and a second (meth)acrylic resin-based coating film, in this order.

In one embodiment, a substrate with a laminated coating film includes a substrate, a first (meth)acrylic resin-based coating film, a binder layer formed from the composition of the present disclosure, and a second (meth)acrylic resin-based coating film, in this order.

The binder layer is provided between the first (meth)acrylic resin-based coating film and the second (meth)acrylic resin-based coating film. Between the substrate and the first (meth)acrylic resin-based coating film, a binder layer formed from the composition of the present disclosure or a conventionally known coating composition, and/or another layer such as an anticorrosive coating film may be provided.

In one embodiment, the substrate with a laminated coating film is an antifouling substrate in which the first (meth) acrylic resin-based coating film is a first antifouling coating film (old antifouling coating film) and the second (meth)acrylic resin-based coating film is a second antifouling coating film (new antifouling coating film). For example, the first (meth) acrylic resin-based coating film may be an antifouling coating film that may have been degraded, and the second (meth) acrylic resin-based coating film may be an antifouling coating film for repair.

In one embodiment, the substrate with a laminated coating film is a substrate with a topcoat coating film, the first (meth)acrylic resin-based coating film is a first topcoat coating film (old topcoat coating film), and the second (meth)acrylic resin-based coating film is a second topcoat coating film (new topcoat coating film). For example, the first (meth)acrylic resin-based coating film may be a topcoat coating film that may have been degraded, and the second (meth)acrylic resin-

based coating film may be a topcoat coating film for repair. The substrate with a topcoat coating film includes, for example, a substrate, an undercoating film, an intermediate coating film as necessary, a first topcoat coating film, a binder layer formed from the composition of the present disclosure, and a second topcoat coating film, in this order.

In the case of the antifouling substrate, the substrate is preferably a ship bottom outer plate, an underwater structure, and a fishing material, and more preferably a ship bottom outer plate. In the case of a substrate with a topcoat coating film, the substrate is preferably an outboard portion, a deck and a superstructure of a ship, an underwater structure, and a land-based structure.

Since the composition of the present disclosure exhibits the above-described effects, it is suitable as a waterborne coating composition for forming a binder layer provided between an old coating film and a new coating film, that is, as a binder coating material used for forming a binder layer for a new coating film when a new coating film is formed on the old coating film. The binder layer improves interlayer adhesion of a laminated coating film including an old coating film, a binder layer, and a new coating film. The binder layer is excellent in adhesion to an old coating film and adhesion to a new coating film. By using the composition of the present disclosure, when repairing an old coating film, a new coating film excellent in adhesion to a lower layer can be formed by interposing a binder layer formed from the composition on the old coating film.

According to the present disclosure, a binder layer formed from the composition of the present disclosure and a new coating film can be formed without removing an old coating film formed on a substrate. Therefore, according to the present disclosure, it is possible to reduce processes and costs in repairing an old coating film.

It may be required to form a resin-based coating film different from the resin constituting the coating film (hereinafter also referred to as "heterogeneous coating film") on the coating film present on the substrate. In this case, coating film defects such as blisters and cracks are likely to occur in the heterogeneous coating film, and thus it has been conventionally necessary to newly apply a coating material again after removing the coating film on the substrate. The binder layer formed from the composition of the present disclosure is not only excellent in adhesion to an old coating film, but also excellent in adhesion to a new coating film formed on the binder layer, and the occurrence of coating film defects can be suppressed. Therefore, the type of the new coating film formed on the binder layer is not particularly limited, and it is also easy to form a heterogeneous coating film based on a resin different from the resin constituting the old coating film.

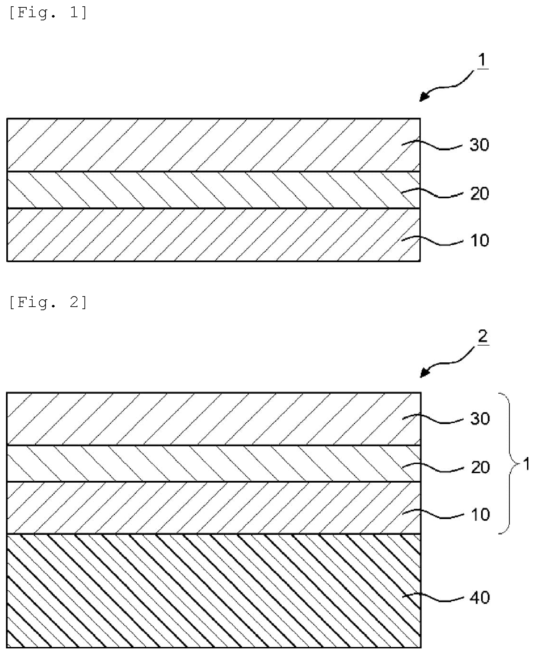

In one embodiment, the laminated coating film includes an old coating film, a binder layer, and a new coating film, in this order. The binder layer is provided on the surface of the old coating film. Fig. 1 shows a schematic cross-sectional view of one embodiment of a laminated coating film. The laminated coating film 1 of Fig. 1 includes an old coating film 10, a binder layer 20, and a new coating film 30 in this order.

In one embodiment, the substrate with a laminated coating film includes a substrate, an old coating film, a binder layer, and a new coating film, in this order. Fig. 2 shows a schematic cross-sectional view of one embodiment of a substrate with a laminated coating film. The substrate with a laminated coating film 2 of Fig. 2 includes a substrate 40, an old coating film 10, a binder layer 20, and a new coating film 30 in this order. Between the substrate 40 and the old coating film 10, a binder layer (not shown) formed from the composition of the present disclosure or a conventionally known coating composition, or another layer such as an anticorrosive coating film may be provided.

The substrate with a repaired coating film can be produced, for example, by a production method including a step of forming a binder layer by applying the waterborne coating composition of the present disclosure to a surface of a first (meth)acrylic resin-based coating film of a substrate with a coating film to be repaired including a substrate and the first (meth)acrylic resin-based coating film provided on the substrate; and a step of forming a second (meth)acrylic resin-based coating film on the binder layer.

The repaired antifouling substrate can be produced, for example, by a production method including a step of forming a binder layer by applying the waterborne coating composition of the present disclosure to a surface of a first antifouling coating film of an antifouling substrate to be repaired including a substrate and a first antifouling coating film provided on the substrate; and a step of forming a second antifouling coating film on the binder layer.

The repaired substrate with a topcoat coating film can be produced, for example, by a production method including a step of forming a binder layer by applying the waterborne coating composition of the present disclosure to a surface of a first topcoat coating film of a substrate with a topcoat coating film to be repaired including a substrate and a first topcoat coating film provided on the substrate; and a step of forming a second topcoat coating film on the binder layer.

The old antifouling coating film and the new antifouling coating film are each a (meth)acrylic resin-based coating film. Examples of the old antifouling coating film and the new antifouling coating film include a hydrolyzable antifouling coating film and a hydration-degradable antifouling coating film, respectively. In the hydrolyzable antifouling coating film, the (meth)acrylic resin constituting the coating film comes into contact with water and undergoes a hydrolysis reaction to be self-dissolved, so that the surface is renewed to exhibit antifouling properties. The coating film formed from the composition of the present disclosure exhibits good adhesion to both a hydrolyzable antifouling coating film and a hydration-degradable antifouling coating film. The coating film formed from the composition of the present disclosure exhibits good adhesion even to an antifouling coating film formed from an organic solvent-based antifouling coating material.

Examples of the hydrolyzable antifouling coating film include a hydrolyzable antifouling coating film containing a

(meth)acrylic resin, and specific examples thereof include an antifouling coating film formed from an antifouling coating material containing a polymerizable unsaturated carboxylic acid silyl ester copolymer, an antifouling coating film formed from an antifouling coating material containing an organopolysiloxane block-containing copolymer, an antifouling coating film formed from an antifouling coating material containing a copolymer including a (meth)acrylic acid metal salt unit, and an antifouling coating film containing an organotin-containing polymer. The polymerizable unsaturated carboxylic acid silyl ester copolymer, the organopolysiloxane block-containing copolymer, the copolymer including a (meth)acrylic acid metal salt unit, and the organotin-containing polymer all correspond to a (meth)acrylic resin.

Examples of the hydration-degradable antifouling coating film include an antifouling coating film formed from an antifouling coating material containing a (meth)acrylic resin and at least one selected from rosins and monocarboxylic acid compounds.

Examples of the old topcoat coating film include a (meth)acrylic resin-based coating film. Examples of the new topcoat coating film include synthetic resin-based coating films such as a (meth)acrylic resin-based coating film and a urethane resin-based coating film, and a (meth)acrylic resin-based coating film is preferable.

The thickness of the antifouling coating film is, for example, 30 to 1,000 μm.

The thickness of the topcoat coating film is, for example, 10 to 200 μm.

A combination of the present disclosure includes an article including a (meth)acrylic resin-based coating film, and the waterborne coating composition of the present disclosure for application to a surface of the (meth)acrylic resin-based coating film. The combination of the present disclosure includes, for example, an article including an antifouling coating film and the waterborne coating composition of the present disclosure for application to a surface of the antifouling coating film. The combination of the present disclosure includes, for example, an article including a topcoat coating film and the waterborne coating composition of the present disclosure for application to a surface of the topcoat coating film.

Examples of the article include a substrate with a coating film including a substrate and a (meth)acrylic resin-based coating film provided on the substrate, and specifically include an antifouling substrate including a substrate and an antifouling coating film (for example, an old antifouling coating film) provided on the substrate, and a substrate with a topcoat coating film including a substrate and a topcoat coating film (for example, an old topcoat coating film) provided on the substrate.

The combination of the present disclosure may further include a (meth)acrylic resin-based coating material for forming a new (meth)acrylic resin-based coating film. The combination of the present disclosure may further include an antifouling coating material for forming a new antifouling coating film. The combination of the present disclosure may further include a topcoat coating material for forming a new topcoat coating film.

In the combination of the present disclosure, the details of each element are as described above. Examples of the antifouling coating material include conventionally known antifouling coating materials. Examples of the antifouling coating material include an antifouling coating material for forming a hydrolyzable antifouling coating film and an antifouling coating material for forming a hydration-degradable antifouling coating film, and specifically antifouling coating materials described above for each type. Examples of the topcoat coating material include conventionally known topcoat coating materials.

[Aspects of Present Disclosure]

The present disclosure relates to, for example, the following [1] to [15].

[1] A waterborne coating composition containing: synthetic resin particles (A);

an organic solvent (B) having an aqueous solubility of more than or equal to 1.0 (g/100 g of water) and a boiling point of higher than or equal to 200°C; and
water, wherein a content ratio of the organic solvent (B) in the composition is 1 to 16% by mass, and the composition is a composition for application to a surface of a (meth)acrylic resin-based coating film.

[2] The waterborne coating composition according to [1], wherein the composition further contains a rubber component (C), and the rubber component (C) includes a structural unit derived from butadiene.
[3] The waterborne coating composition according to [2], wherein a content ratio of the structural unit derived from butadiene in the rubber component (C) is 25% by mass or more.
[4] The waterborne coating composition according to any one of [1] to [3], wherein the synthetic resin particles (A) are at least one selected from (meth)acrylic resin particles and epoxy resin particles.
[5] The waterborne coating composition according to any one of [2] to [4], wherein when the total content of the synthetic resin particles (A) and the rubber component (C) is 100 parts by mass, a content of the synthetic resin particles (A) is 60 to 95 parts by mass, and a content of the rubber component (C) is 5 to 40 parts by mass.
[6] The waterborne coating composition according to any one of [1] to [5], wherein a content ratio of the water in the

composition is 20 to 60% by mass.
[7] The waterborne coating composition according to any one of [1] to [6], wherein the (meth)acrylic resin-based coating film is an antifouling coating film.
[8] The waterborne coating composition according to [7], wherein the antifouling coating film is a hydrolyzable antifouling coating film or a hydration-degradable antifouling coating film.
[9] The waterborne coating composition according to [7] or [8], wherein the antifouling coating film is an antifouling coating film provided on at least one selected from a ship bottom outer plate, an underwater structure, and a fishing material.
[10] The waterborne coating composition according to any one of [1] to [6], wherein the (meth)acrylic resin-based coating film is a topcoat coating film.
[11] A combination of: an article including a (meth)acrylic resin-based coating film; and the waterborne coating composition according to any one of [1] to [10] for application to a surface of the (meth)acrylic resin-based coating film.
[12] A substrate with a laminated coating film, including: a substrate; a first (meth)acrylic resin-based coating film provided on the substrate; a binder layer formed from the waterborne coating composition according to any one of [1] to [10]; and a second (meth)acrylic resin-based coating film, in this order.
[13] The substrate with a laminated coating film according to [12], wherein the first (meth)acrylic resin-based coating film is an antifouling coating film, and the second (meth)acrylic resin-based coating film is an antifouling coating film for repair.
[14] The substrate with a laminated coating film according to [12], wherein the first (meth)acrylic resin-based coating film is a topcoat coating film, and the second (meth)acrylic resin-based coating film is a topcoat coating film for repair.
[15] A method for producing a substrate with a repaired coating film, including: a step of forming a binder layer by applying the waterborne coating composition according to any one of [1] to [10] to a surface of a first (meth)acrylic resin-based coating film of a substrate with a coating film to be repaired, the substrate including a substrate and the first (meth)acrylic resin-based coating film provided on the substrate; and a step of forming a second (meth)acrylic resin-based coating film on the binder layer.

## Examples

Hereinafter, the waterborne coating composition of the present disclosure will be described more specifically based on Examples, but the waterborne coating composition of the present disclosure is not limited to the following Examples at all. In the following Examples and Comparative Examples, "part(s)" represents "part(s) by mass".

### [Component]

The components used in Examples and Comparative Examples are described below.

- Resin emulsion: PRIMAL TX-100, waterborne emulsion of (meth)acrylic resin (Tg: 28°C, self-crosslinking) manufactured by The Dow Chemical Company, non-volatile content: 46.5% by mass
- Resin emulsion: PRIMAL AC-3001, waterborne emulsion of (meth)acrylic resin (Tg: 32°C, non-self-crosslinking) manufactured by The Dow Chemical Company, non-volatile content: 48% by mass

- Resin emulsion: Beckopox EP 2384w/57WA, manufactured by Allnex GmbH, waterborne emulsion of #1001 type epoxy resin, non-volatile content: 57% by mass, epoxy equivalent: 450 g/mol
- Curing agent aqueous solution: Sunmide WH-900, manufactured by Evonik Industries AG, aqueous solution of modified aliphatic polyamine, non-volatile content: 60% by mass

The following rubber emulsions are all emulsions of styrene-butadiene-based rubber components manufactured by Asahi Kasei Corporation.

- Rubber emulsion: SB latex DL-612,
  non-volatile content: 48% by mass, Tg: -1°C
- Rubber emulsion: SB latex L-5702,
  non-volatile content: 48% by mass, Tg: 25°C
- Rubber emulsion: SB latex L-2301,
  non-volatile content: 50% by mass, Tg: 24°C
- Rubber emulsion: SB latex L-3200,
  non-volatile content: 48% by mass, Tg: 8°C
- Rubber emulsion: SB latex A-7090,

non-volatile content: 50% by mass, Tg: 6°C

- Rubber emulsion: SB latex L-7063, non-volatile content: 48% by mass, Tg: -1°C
- Rubber emulsion: SB latex HA-040, non-volatile content: 52% by mass, Tg: -7°C
- Rubber emulsion: SB latex L-7850, non-volatile content: 48% by mass, Tg: -27°C
- Rubber emulsion: SB latex A-7901, non-volatile content: 50% by mass, Tg: -35°C

- Pigment: TIPAQUE R-930, manufactured by Ishihara Sangyo Kaisha, Ltd., titanium oxide
- Pigment: BENGALA 580R, manufactured by TODA KOGYO CORP.
- Pigment: Mica Powder 325mesh, Mica manufactured by Fukuoka Talc Co., LTD.
- Pigment: Mica Powder 100mesh, Mica manufactured by Fukuoka Talc Co., LTD.
- Pigment: F-2 talc, manufactured by FUJI TALC INDUSTRIAL CO., LTD.
- Pigment: MA-100, manufactured by Mitsubishi Chemical Corporation, carbon black
- Dispersant: DISPERBYK-190, non-volatile content: 40% by mass, manufactured by BYK-Chemie GmbH
- Wetting agent: SURFYNOL SE-F, manufactured by Evonik Industries AG, non-volatile content: 80% by mass
- Anti-sagging agent (anti-settling agent): BENTONE DE, manufactured by Elementis plc
- Antifoaming agent: TEGO Airex902W, manufactured by Evonik Industries AG, non-volatile content: 20% by mass
- Thickener: PRIMAL RM-8W, manufactured by The Dow Chemical Company, non-volatile content: 21.3% by mass
- Thickener: RHEOLATE 288, manufactured by Elementis plc, non-volatile content: 25% by mass
- Antifungal agent: ACTICIDE MBS, non-volatile content: 5% by mass manufactured by Thor Specialty Chemical
- Organic solvent: organic solvent described in Table 1 below

Table 1

| Name | Abbr. | Aqueous solubility (g/100 g of water) | Boiling point (°C) | containing linear alkoxy group having 3 or more carbon atoms at molecular terminal |
|---|---|---|---|---|
| Diethylene glycol monobutyl ether | BCA | miscible | 230 | Yes |
| Dipropylene glycol monopropyl ether | DPnP | 18 | 210 | Yes |
| Tripropylene glycol monobutyl ether | TPnB | 3 | 276 | Yes |
| Diethylene glycol monohexyl ether | HCA | 1.7 | 260 | Yes |
| Dipropylene glycol monobutyl ether | DPnB | 3 | 222 | Yes |
| Benzyl alcohol | BzOH | 4 | 205 | No |
| Dipropylene glycol monomethyl ether | DPM | miscible | 189 | No |
| Propylene glycol monomethyl ether | PGM | miscible | 120 | No |
| 2,2,4-Trimethylpentane-1,3-diol monoisobutyrate | TEX | 0.08 | 255 | No |

[Non-volatile content concentration]

The non-volatile content of the composition and each component means a heating residue when the composition and each component are respectively dried in a thermostatic chamber at 108°C for 3 hours. Specifically, the heating residue is a residue of a sample obtained by weighing 1.0 g of the sample in a flat bottom dish, uniformly spreading the

sample using a wire having a known mass, and drying the sample in the thermostatic chamber under the conditions of 1 atm and 108°C for 3 hours. From the amount of the heating residue, content ratios of the non-volatile contents (non-volatile content concentration) (% by mass) of the composition and each component were calculated.

[Example 1]

To a container were added 11.4 parts of deionized water, 1.5 parts of DISPERBYK-190 (dispersant), 0.2 parts of TEGO Airex902W (antifoaming agent), and 0.2 parts of BENTONE DE (anti-sagging agent), and the mixture was blended using a high speed disperser and dispersed for 5 minutes. Subsequently, 4.5 parts of TIPAQUE R-930 (pigment), 0.5 parts of BENGALA 580R (pigment), 7 parts of Mica Powder 325mesh (pigment), and 0.1 parts of PRIMAL RM-8W (thickener) were added while rotating the high speed disperser, and the mixture was stirred for 1 hour. Subsequently, while rotating the high speed disperser, 10 parts of PRIMAL TX-100 ((meth)acrylic resin emulsion) and 18 parts of F-2 talc (pigment) were added and dispersed, and after 30 minutes, 32.1 parts of PRIMAL TX-100 ((meth)acrylic resin emulsion), 7.1 parts of SB latex DL-612 (styrene-butadiene-based rubber emulsion), 4.5 parts of diethylene glycol monobutyl ether (organic solvent), 0.2 parts of TEGO Airex902W (antifoaming agent), 0.3 parts of PRIMAL RM-8W (thickener), 2.2 parts of deionized water, and 0.2 parts of ACTICIDE MBS (antifungal agent) were added, and the mixture was stirred for 10 minutes to obtain a binder coating composition.

[Examples 2 to 19 and 21 to 27 and Comparative Example 1 to 5]

Each coating composition was prepared in the same manner as in Example 1 except that each component shown in Tables 2 to 4 was used in the amount shown in each table.

[Example 20]

To a container were added 15.9 parts of deionized water, 1 part of DISPERBYK-190 (dispersant), 0.4 parts of SURFYNOL SE-F (wetting agent), 0.1 parts of TEGO Airex902W (antifoaming agent), and 0.2 parts of BENTONE DE (anti-sagging agent), and the mixture was blended using a high speed disperser and dispersed for 5 minutes. Subsequently, 1.3 parts of TIPAQUE R-930 (pigment), 0.4 parts of BENGALA 580R (pigment), 17 parts of F-2 talc (pigment), 6 parts of Mica Powder 100mesh (pigment), and glass beads were added while rotating the high speed disperser, and the mixture was stirred for 1 hour using a paint shaker to disperse these components.

After the dispersion, the filtrate obtained by removing the glass beads from the mixture with a filtration net (mesh opening: 80 mesh) was transferred to a container, and 10 parts of F-2 talc (pigment), 0.5 parts of benzyl alcohol (organic solvent), 2 parts of dipropylene glycol monobutyl ether (organic solvent), 38 parts of Beckopox EP 2384w/57WA (epoxy resin emulsion), 7 parts of SB latex DL-612 (styrene-butadiene-based rubber emulsion) and 0.2 parts of TEGO Airex902W (antifoaming agent) were added and dispersed for 30 minutes while rotating the high speed disperser to obtain a main agent component of a binder coating composition.

In another container, 60 parts of Sunmide WH-900 (polyamine aqueous solution), 10 parts of diethylene glycol monobutyl ether (organic solvent), and 30 parts of deionized water were added, and mixed for 30 minutes using a high speed disperser to obtain a curing agent component of a binder coating composition.

94 parts of the main agent component and 6 parts of the curing agent component were mixed to obtain a binder coating composition.

[Test Method 1]

The following antifouling coating materials were used.

- AF1: hydration-degradable antifouling coating material
  (Seajet 033, manufactured by CHUGOKU MARINE PAINTS, LTD.)
- AF2: zinc acrylic resin-based hydrolyzable antifouling coating material
  (SEA PREMIER 1000, manufactured by CHUGOKU MARINE PAINTS, LTD.)
- AF3: silyl resin-based hydrolyzable antifouling coating material
  (SEA GRANDPRIX 2000, manufactured by CHUGOKU MARINE PAINTS, LTD.)
- AF4: hydration-degradable antifouling coating material
  (Waterborne antifouling coating material described in Example 1 of JP 2021-155719 A)

Each of the antifouling coating materials contains a (meth)acrylic resin.

Any one of antifouling coating materials AF1 to AF3 was applied to the surface of an FRP substrate and dried to

form an antifouling coating film having a thickness of 100 μm, thereby obtaining an antifouling substrate including the FRP substrate and the antifouling coating film. The antifouling substrate was statically immersed in seawater. One year after immersion, the antifouling substrate was collected, and fouling and seawater were removed by highpressure water washing (100 bar, 50 cm distance), followed by drying at room temperature. The coating composition of Example or Comparative Example was applied to the antifouling coating film of the antifouling substrate, that is, the immersed antifouling coating film (old antifouling coating film) using an applicator (gap: 0.1 mm) and dried to form a test coating film having a thickness of 30 μm, thereby obtaining a test plate (1). The test plate (1) includes the FRP substrate and a laminated coating film of the old antifouling coating film and the test coating film.

The coating composition of Example or Comparative Example was applied to the surface of an FRP substrate using an applicator (gap: 0.1 mm) and dried to form a test coating film (binder layer) having a thickness of 30 μm. Any one of antifouling coating materials AF1 to AF4 was applied to the binder layer and dried to form an antifouling coating film (topcoat antifouling coating film) having a thickness of 50 μm, thereby obtaining a test plate (2). The test plate (2) includes the FRP substrate and a laminated coating film of the binder layer and the antifouling coating film.

The coating composition of Example or Comparative Example was applied to the surface of the FRP substrate using an applicator (gap: 0.1 mm) and dried to form a test coating film having a thickness of 30 μm, thereby obtaining a test plate (3). The test plate (3) includes the FRP substrate and the test coating film.

[Evaluation Method]

<Adhesiveness of old antifouling coating film - test coating film>

In accordance with JIS K5600-5-6:1999 (cross-cut method), the laminated coating film of the test plate (1) was cut in a 5 × 5 grid pattern (25 squares) at intervals of 2 mm until reaching the FRP substrate, and a peeling test after sticking an adhesive tape was performed, and evaluation was performed according to the following criteria.

Evaluation criteria of adhesiveness (adhesion)

5 ··· The edges of the cuts are completely smooth, and no peeling is observed in any of the grid squares.
4 ··· The peeled or old antifouling coating film-cohesive failure area is 4% or less.
3 ··· The peeled area is more than 4% and 12% or less.
2 ··· The peeled area is more than 12% and 36% or less.
1 ··· The peeled area is more than 36%.

<Adhesiveness of test coating film (binder layer) - topcoat antifouling coating film>

In accordance with JIS K5600-5-6:1999 (cross-cut method), the laminated coating film of the test plate (2) was cut in a 5 × 5 grid pattern (25 squares) at intervals of 2 mm until reaching the FRP substrate, and a peeling test after sticking an adhesive tape was performed, and evaluation was performed according to the following criteria.

Evaluation criteria of adhesiveness (adhesion)

5 ··· The edges of the cuts are completely smooth, and no peeling is observed in any of the grid squares.
4 ··· The peeled or topcoat antifouling coating film-cohesive failure area is 4% or less.
3 ··· The peeled area is more than 4% and 12% or less.
2 ··· The peeled area is more than 12% and 36% or less.
1 ··· The peeled area is more than 36%.

<Adhesiveness of FRP substrate - test coating film>

In accordance with JIS K5600-5-6:1999 (cross-cut method), the test coating film of the test plate (3) was cut in a 5 × 5 grid pattern (25 squares) at intervals of 2 mm until reaching the FRP substrate, and a peeling test after sticking an adhesive tape was performed, and evaluation was performed according to the following criteria.

Evaluation criteria of adhesiveness (adhesion)

5 · · · The edges of the cuts are completely smooth, and no peeling is observed in any of the grid squares.

4 · · · The peeled or test coating film-cohesive failure area is 4% or less.

3 · · · The peeled area is more than 4% and 12% or less.

2 · · · The peeled area is more than 12% and 36% or less.

1 · · · The peeled area is more than 36%.

Table 2

| | | | Example 1 | Example 2 | Example 3 | Example 4 | Example 5 | Comparative Example 1 | Comparative Example 2 | Comparative Example 3 |
|---|---|---|---|---|---|---|---|---|---|---|
| Binder coating composition | Resin emulsion | PRIMAL TX-100 | 42.1 | 42.1 | 42.1 | 42.1 | 42.1 | 42.1 | 42.1 | 42.1 |
| | | PRIMAL AC-3001 | | | | | | | | |
| | Rubber emulsion | SB latex DL-612 | 7.1 | 7.1 | 7.1 | 7.1 | 7.1 | 7.1 | 7.1 | 7.1 |
| | | SB latex L-5702 | | | | | | | | |
| | Organic solvent | BCA | 4.5 | | | | | | | |
| | | DPnP | | 4.5 | | | | | | |
| | | TPnB | | | 4.5 | | | | | |
| | | HCA | | | | 4.5 | | | | |
| | | DPnB | | | | | 4.5 | | | |
| | | DPM | | | | | | 4.5 | | |
| | | PGM | | | | | | | 4.5 | |
| | | TEX | | | | | | | | 4.5 |
| | Pigment | R-930 | 4.5 | 4.5 | 4.5 | 4.5 | 4.5 | 4.5 | 5.0 | 4.5 |
| | | 580R | 0.5 | 0.5 | 0.5 | 0.5 | 0.5 | 0.5 | | 0.5 |
| | | Mica Powder 325mesh | 7.0 | 7.0 | 7.0 | 7.0 | 7.0 | 7.0 | 7.0 | 7.0 |
| | | F-2 talc | 18.0 | 18.0 | 18.0 | 18.0 | 18.0 | 18.0 | 18.0 | 18.0 |
| | | MA-100 | | | | | | | 0.025 | |
| | Dispersant | DISPERBYK-190 | 1.5 | 1.5 | 1.5 | 1.5 | 1.5 | 1.5 | 1.5 | 1.5 |
| | Anti-sagging agent | BENTONE DE | 0.2 | 0.2 | 0.2 | 0.2 | 0.2 | 0.2 | 0.2 | 0.2 |
| | Antifoaming agent | TEGO Airex902W | 0.4 | 0.4 | 0.4 | 0.4 | 0.4 | 0.4 | 0.4 | 0.4 |

(continued)

| | | | Example 1 | Example 2 | Example 3 | Example 4 | Example 5 | Comparative Example 1 | Comparative Example 2 | Comparative Example 3 |
|---|---|---|---|---|---|---|---|---|---|---|
| | Thickener | PRIMAL RM-8W | 0.4 | 0.4 | 0.4 | 0.4 | 0.4 | 0.4 | 0.4 | 0.4 |
| | | RHEOLATE 288 | | | | | | | | |
| | Antifungal agent | ACTICIDE MBS | 0.2 | 0.2 | 0.2 | 0.2 | 0.2 | 0.2 | 0.2 | 0.2 |
| | Water | Deionized water | 13.6 | 13.6 | 13.6 | 13.6 | 13.6 | 13.6 | 12.5 | 13.6 |
| | | (Total) | 100.0 | 100.0 | 100.0 | 100.0 | 100.0 | 100.0 | 98.9 | 100.0 |
| Adhesiveness between old antifouling coating film and test coating film | | AF1: hydration-degradable | 5 | 5 | 5 | 5 | 5 | 1 | 1 | 1 |
| | | AF2: zinc acrylic resin-based hydrolyzable | 5 | 5 | 5 | 5 | 5 | 1 | 1 | 1 |
| | | AF3: silyl resin-based hydrolyzable | 5 | 5 | 4 | 5 | 5 | 1 | 1 | 1 |
| Adhesiveness between substrate and test coating film | | Adhesiveness of FRP - test coating film | 5 | 5 | 5 | 5 | 5 | 5 | 5 | 5 |
| Adhesiveness between test coating film and topcoat antifouling coating film | | AF1: hydration-degradable | 5 | 5 | 5 | 5 | 5 | 5 | 5 | 5 |
| | | AF2: zinc acrylic resin-based hydrolyzable | 5 | 5 | 5 | 5 | 5 | 5 | 5 | 5 |
| | | AF3: silyl resin-based hydrolyzable | 5 | 5 | 5 | 5 | 5 | 5 | 5 | 5 |
| | | AF4: waterborne hydration-degradable | 5 | 5 | 5 | 5 | 5 | 5 | 5 | 5 |

Table 2 (continued)

| | | | Example 6 | Example 7 | Example 8 | Example 9 | Example 10 | Example 11 | Example 12 | Comparative Example 4 |
|---|---|---|---|---|---|---|---|---|---|---|
| Binder coating composition | Resin emulsion | PRIMAL TX-100 | 49.5 | 37.0 | 32.0 | 42.1 | 42.1 | 42.1 | 42.1 | 42.1 |
| | | PRIMAL AC-3001 | | | | | | | | |
| | Rubber emulsion | SB latex DL-612 | | 12.0 | 17.0 | 7.1 | 7.1 | 7.1 | 7.1 | 7.1 |
| | | SB latex L-5702 | | | | | | | | |
| | Organic solvent | BCA | 4.5 | 4.5 | 4.5 | 8.0 | 10.0 | 12.0 | 15.0 | 18.0 |
| | | DPnP | | | | | | | | |
| | | TPnB | | | | | | | | |
| | | HCA | | | | | | | | |
| | | DPnB | | | | | | | | |
| | | DPM | | | | | | | | |
| | | PGM | | | | | | | | |
| | | TEX | | | | | | | | |
| | Pigment | R-930 | 4.5 | 4.5 | 4.5 | 4.5 | 4.5 | 4.5 | 4.5 | 4.5 |
| | | 580R | 0.5 | 0.5 | 0.5 | 0.5 | 0.5 | 0.5 | 0.5 | 0.5 |
| | | Mica Powder 325mesh | 7.0 | 7.0 | 7.0 | 7.0 | 7.0 | 7.0 | 7.0 | 7.0 |
| | | F-2 talc | 18.0 | 18.0 | 18.0 | 18.0 | 18.0 | 18.0 | 18.0 | 18.0 |
| | | MA-100 | | | | | | | | |
| | Dispersant | DISPERBYK-190 | 1.5 | 1.5 | 1.5 | 1.5 | 1.5 | 1.5 | 1.5 | 1.5 |
| | Anti-sagging agent | BENTONE DE | 0.2 | 0.2 | 0.2 | 0.2 | 0.2 | 0.2 | 0.2 | 0.2 |

(continued)

| | | | Example 6 | Example 7 | Example 8 | Example 9 | Example 10 | Example 11 | Example 12 | Comparative Example 4 |
|---|---|---|---|---|---|---|---|---|---|---|
| | Antifoaming agent | TEGO Airex902W | 0.4 | 0.4 | 0.4 | 0.4 | 0.4 | 0.4 | 0.4 | 0.4 |
| | Thickener | PRIMAL RM-8W | 0.4 | 0.4 | 0.4 | 0.4 | 0.4 | 0.8 | 0.8 | 0.8 |
| | | RHEOLATE 288 | | | | | | | | |
| | Antifungal agent | ACTICIDE MBS | 0.2 | 0.2 | 0.2 | 0.2 | 0.2 | 0.2 | 0.2 | 0.2 |
| | Water | Deionized water | 13.3 | 13.8 | 13.8 | 10.1 | 8.1 | 5.7 | 2.7 | 1.4 |
| | | (Total) | 100.0 | 100.0 | 100.0 | 100.0 | 100.0 | 100.0 | 100.0 | 101.7 |
| Adhesiveness between old antifouling coating film and test coating film | | AF1: hydration-degradable | 4 | 5 | 3 | 5 | 5 | 5 | 5 | 3 |
| | | AF2: zinc acrylic resin-based hydrolyzable | 5 | 5 | 5 | 5 | 5 | 5 | 5 | 3 |
| | | AF3: silyl resin-based hydrolyzable | 4 | 5 | 3 | 5 | 5 | 5 | 5 | 2 |
| Adhesiveness between substrate and test coating film | | Adhesiveness of FRP - test coating film | 5 | 5 | 5 | 5 | 5 | 5 | 5 | 5 |
| Adhesiveness between test coating film and topcoat antifouling coating film | | AF1: hydration-degradable | 5 | 5 | 5 | 5 | 5 | 5 | 5 | 5 |
| | | AF2: zinc acrylic resin-based hydrolyzable | 5 | 5 | 5 | 5 | 5 | 5 | 5 | 5 |
| | | AF3: silyl resin-based hydrolyzable | 5 | 5 | 5 | 5 | 5 | 5 | 5 | 5 |
| | | AF4: waterborne hydration-degradable | 5 | 5 | 5 | 5 | 5 | 5 | 5 | 5 |

Table 3

| | | | Example 13 | Example 14 | Example 15 | Example 16 |
|---|---|---|---|---|---|---|
| Binder coating composition | Resin emulsion | PRIMAL TX-100 | 42.1 | 40.0 | | 40.0 |
| | | PRIMAL AC-3001 | | | 40.0 | |
| | Rubber emulsion | SB latex DL-612 | | 6.7 | 6.7 | 6.7 |
| | | SB latex L-5702 | 7.1 | | | |
| | Organic solvent | BCA | 4.5 | | | 2.0 |
| | | DPnP | | | | |
| | | TPnB | | | | |
| | | HCA | | | | |
| | | DPnB | | 2.0 | 2.0 | |
| | | DPM | | | | |
| | | PGM | | | | |
| | | TEX | | | | |
| | Pigment | R-930 | 4.5 | 5.0 | 5.0 | 5.0 |
| | | 580R | 0.5 | | | |
| | | Mica Powder 325mesh | 7.0 | 7.0 | 7.0 | 7.0 |
| | | F-2 talc | 18.0 | 15.0 | 15.0 | 15.0 |
| | | MA-100 | | 0.05 | 0.05 | 0.025 |
| | Dispersant | DISPERBYK-190 | 1.5 | 1.5 | 1.5 | 1.5 |
| | Anti-sagging agent | BENTONE DE | 0.2 | 0.2 | 0.2 | 0.2 |
| | Antifoaming agent | TEGO Airex902W | 0.4 | 0.2 | 0.2 | 0.4 |
| | Thickener | PRIMAL RM-8W | 0.4 | | | |
| | | RHEOLATE 288 | | 0.1 | 0.2 | 0.2 |
| | Antifungal agent | ACTICIDE MBS | 0.2 | 0.2 | 0.2 | 0.2 |
| | Water | Deionized water | 13.6 | 15.9 | 16.2 | 15.0 |
| | | (Total) | 100.0 | 93.9 | 94.2 | 93.2 |
| Adhesiveness between old antifouling coating film and test coating film | | AF1: hydration-degradable | 5 | 4 | 3 | 4 |
| | | AF2: zinc acrylic resin-based hydrolyzable | 5 | 5 | 5 | 5 |
| | | AF3: silyl resin-based hydrolyzable | 5 | 4 | 4 | 4 |
| Adhesiveness between substrate and test coating film | | Adhesiveness of FRP - test coating film | 5 | 5 | 5 | 5 |

(continued)

| | | Example 13 | Example 14 | Example 15 | Example 16 |
|---|---|---|---|---|---|
| Adhesiveness between test coating film and topcoat antifouling coating film | AF1: hydration-degradable | 5 | 5 | 5 | 5 |
| | AF2: zinc acrylic resin-based hydrolyzable | 5 | 5 | 5 | 5 |
| | AF3: silyl resin-based hydrolyzable | 5 | 5 | 5 | 5 |
| | AF4: waterborne hydration-degradable | 5 | 5 | 5 | 5 |

Table 3 (continued)

| | | | Comparative Example 5 | Example 17 | Example 18 | Example 19 | Example 20 |
|---|---|---|---|---|---|---|---|
| Binder coating composition | Resin emulsion | PRIMAL TX-100 | 40.0 | 42.1 | 42.1 | 42.1 | See main text |
| | | PRIMAL AC-3001 | | | | | |
| | Rubber emulsion | SB latex DL-612 | 6.7 | 7.1 | 7.1 | 7.1 | |
| | | SB latex L-5702 | | | | | |
| | Organic solvent | BCA | | 4.5 | 8.0 | 10.0 | |
| | | DPnP | | | | | |
| | | TPnB | | | | | |
| | | HCA | | | | | |
| | | DPnB | | | | | |
| | | DPM | | | | | |
| | | PGM | | | | | |
| | | TEX | 2.0 | | | | |
| | Pigment | R-930 | 5.0 | 5.0 | 5.0 | 5.0 | |
| | | 580R | | | | | |
| | | Mica Powder 325mesh | 7.0 | 7.0 | 7.0 | 7.0 | |
| | | F-2 talc | 15.0 | 16.0 | 16.0 | 16.0 | |
| | | MA-100 | 0.025 | 0.025 | 0.025 | 0.025 | |
| | Dispersant | DISPER-BYK-190 | 1.5 | 1.5 | 1.5 | 1.5 | |
| | Anti-sagging agent | BENTONE DE | 0.2 | 0.2 | 0.2 | 0.2 | |
| | Antifoaming agent | TEGO Airex902W | 0.4 | 0.4 | 0.4 | 0.4 | |
| | Thickener | PRIMAL RM-8W | | 0.4 | 0.4 | 0.4 | |
| | | RHEOLATE 288 | 0.4 | | | | |
| | Antifungal agent | ACTICIDE MBS | 0.2 | 0.2 | 0.2 | 0.2 | |
| | Water | Deionized water | 15.0 | 14.5 | 14.5 | 14.5 | |
| | | (Total) | 93.4 | 98.9 | 102.4 | 104.4 | |

(continued)

| | | Comparative Example 5 | Example 17 | Example 18 | Example 19 | Example 20 |
|---|---|---|---|---|---|---|
| Adhesiveness between old antifouling coating film and test coating film | AF1: hydration-degradable | 1 | 5 | 5 | 5 | 4 |
| | AF2: zinc acrylic resin-based hydrolyzable | 1 | 5 | 5 | 5 | 5 |
| | AF3: silyl resin-based hydrolyzable | 1 | 5 | 5 | 5 | 4 |
| Adhesiveness between substrate and test coating film | Adhesiveness of FRP - test coating film | 5 | 5 | 5 | 5 | 5 |
| Adhesiveness between test coating film and topcoat antifouling coating film | AF1: hydration-degradable | 5 | 5 | 5 | 5 | 5 |
| | AF2: zinc acrylic resin-based hydrolyzable | 5 | 5 | 5 | 5 | 5 |
| | AF3: silyl resin-based hydrolyzable | 5 | 5 | 5 | 5 | 5 |
| | AF4: waterborne hydration-degradable | 5 | 5 | 5 | 5 | 5 |

Table 4

| | | | | Example 1 | Example 13 | Example 21 | Example 22 | Example 23 |
|---|---|---|---|---|---|---|---|---|
| Binder coating composition | Resin emulsion | PRIMAL TX-100 | | 42.1 | 42.1 | 42.1 | 42.1 | 42.1 |
| | Rubber emulsion | SB latex DL-612 | Tg : -1°C | 7.1 | | | | |
| | | SB latex L-5702 | Tg : 25°C | | 7.1 | | | |
| | | SB latex L-2301 | Tg : 24°C | | | 6.8 | | |
| | | SB latex L-3200 | Tg : 8°C | | | | 7.1 | |
| | | SB latex A-7090 | Tg : 6°C | | | | | 6.8 |
| | | SB latex L-7063 | Tg : -1°C | | | | | |
| | | SB latex HA-040 | Tg : -7°C | | | | | |
| | | SB latex L-7850 | Tg : -27°C | | | | | |
| | | SB latex A-7901 | Tg : -35°C | | | | | |
| | Organic solvent | BCA | | 4.5 | 4.5 | 4.5 | 4.5 | 4.5 |
| | Pigment | R-930 | | 4.5 | 4.5 | 4.5 | 4.5 | 4.5 |
| | | 580R | | 0.5 | 0.5 | 0.5 | 0.5 | 0.5 |
| | | Mica Powder 325mesh | | 7.0 | 7.0 | 7.0 | 7.0 | 7.0 |
| | | F-2 talc | | 18.0 | 18.0 | 18.0 | 18.0 | 18.0 |
| | Dispersant | DISPER BYK-190 | | 1.5 | 1.5 | 1.5 | 1.5 | 1.5 |
| | Anti-sagging agent | BENTONE DE | | 0.2 | 0.2 | 0.2 | 0.2 | 0.2 |
| | Antifoaming agent | TEGO Airex902W | | 0.4 | 0.4 | 0.4 | 0.4 | 0.4 |
| | Thickener | PRIMAL RM-8W | | 0.4 | 0.4 | 0.4 | 0.4 | 0.4 |
| | Antifungal agent | ACTICIDE MBS | | 0.2 | 0.2 | 0.2 | 0.2 | 0.2 |
| | Water | Deionized water | | 13.6 | 13.6 | 13.9 | 13.6 | 13.9 |
| | | (Total) | | 100.0 | 100.0 | 100.0 | 100.0 | 100.0 |
| Adhesiveness between old antifouling coating film and test coating film | | AF1: hydration-degradable | | 5 | 5 | 5 | 5 | 5 |
| | | AF2: zinc acrylic resin-based hydrolyzable | | 5 | 5 | 5 | 5 | 5 |
| | | AF3: silyl resin-based hydrolyzable | | 5 | 5 | 5 | 5 | 5 |

(continued)

| | | Example 1 | Example 13 | Example 21 | Example 22 | Example 23 |
|---|---|---|---|---|---|---|
| Adhesiveness between substrate and test coating film | Adhesiveness of FRP - test coating film | 5 | 5 | 5 | 5 | 5 |
| Adhesiveness between test coating film and topcoat antifouling coating film | AF1: hydration-degradable | 5 | 5 | 5 | 5 | 5 |
| | AF2: zinc acrylic resin-based hydrolyzable | 5 | 5 | 5 | 5 | 5 |
| | AF3: silyl resin-based hydrolyzable | 5 | 5 | 5 | 5 | 5 |
| | AF4: waterborne hydration-degradable | 5 | 5 | 5 | 5 | 5 |

Table 4 (continued)

| | | | | Example 24 | Example 25 | Example 26 | Example 27 | Example 6 |
|---|---|---|---|---|---|---|---|---|
| Binder coating composition | Resin emulsion | PRIMAL TX-100 | | 42.1 | 42.1 | 42.1 | 42.1 | 49.5 |
| | Rubber emulsion | SB latex DL-612 | Tg : -1°C | | | | | |
| | | SB latex L-5702 | Tg : 25°C | | | | | |
| | | SB latex L-2301 | Tg : 24°C | | | | | |
| | | SB latex L-3200 | Tg : 8°C | | | | | |
| | | SB latex A-7090 | Tg : 6°C | | | | | |
| | | SB latex L-7063 | Tg : -1°C | 7.1 | | | | |
| | | SB latex HA-040 | Tg : -7°C | | 6.6 | | | |
| | | SB latex L-7850 | Tg : -27°C | | | 7.1 | | |
| | | SB latex A-7901 | Tg : -35°C | | | | 6.8 | |
| | Organic solvent | BCA | | 4.5 | 4.5 | 4.5 | 4.5 | 4.5 |
| | Pigment | R-930 | | 4.5 | 4.5 | 4.5 | 4.5 | 4.5 |
| | | 580R | | 0.5 | 0.5 | 0.5 | 0.5 | 0.5 |
| | | Mica Powder 325mesh | | 7.0 | 7.0 | 7.0 | 7.0 | 7.0 |
| | | F-2 talc | | 18.0 | 18.0 | 18.0 | 18.0 | 18.0 |
| | Dispersant | DISPER BYK-190 | | 1.5 | 1.5 | 1.5 | 1.5 | 1.5 |
| | Anti-sagging agent | BENTONE DE | | 0.2 | 0.2 | 0.2 | 0.2 | 0.2 |
| | Antifoaming agent | TEGO Airex902W | | 0.4 | 0.4 | 0.4 | 0.4 | 0.4 |
| | Thickener | PRIMAL RM-8W | | 0.4 | 0.4 | 0.4 | 0.4 | 0.4 |
| | Antifungal agent | ACTICIDE MBS | | 0.2 | 0.2 | 0.2 | 0.2 | 0.2 |
| | Water | Deionized water | | 13.6 | 14.1 | 13.6 | 13.9 | 13.3 |
| | | (Total) | | 100.0 | 100.0 | 100.0 | 100.0 | 100.0 |
| Adhesiveness between old antifouling coating film and test coating film | | AF1: hydration-degradable | | 5 | 5 | 5 | 4 | 4 |
| | | AF2: zinc acrylic resin-based hydrolyzable | | 5 | 5 | 5 | 5 | 5 |
| | | AF3: silyl resin-based hydrolyzable | | 5 | 5 | 5 | 5 | 4 |

(continued)

| | | Example 24 | Example 25 | Example 26 | Example 27 | Example 6 |
|---|---|---|---|---|---|---|
| Adhesiveness between substrate and test coating film | Adhesiveness of FRP - test coating film | 5 | 5 | 5 | 5 | 5 |
| Adhesiveness between test coating film and topcoat antifouling coating film | AF1: hydration-degradable | 5 | 5 | 5 | 5 | 5 |
| | AF2: zinc acrylic resin-based hydrolyzable | 5 | 5 | 5 | 5 | 5 |
| | AF3: silyl resin-based hydrolyzable | 5 | 5 | 5 | 5 | 5 |
| | AF4: waterborne hydration-degradable | 5 | 5 | 5 | 5 | 5 |

[Test Method 2]

BANNOH 1500 (manufactured by CHUGOKU MARINE PAINTS, LTD.) was applied to the surface of a sandblasted steel plate (150 mm × 70 mm × 1.6 mm) using an air spray so as to have a dry film thickness of 200 μm, and dried at 23°C for 1 day to form an undercoat coating film. An acrylic resin-based topcoat coating material, ACRY 800 Topcoat (manufactured by Chugoku Marine Paints, Ltd.) was applied onto the undercoat coating film and dried to form a coating film having a thickness of 40 μm, thereby obtaining a topcoat coating film substrate (test piece). The obtained topcoat coating film substrate was subjected to water spray exposure. The water spray exposure test was conducted using an outdoor apparatus that maintained a horizontal orientation and continuously sprayed tap water, with the test pieces placed on the apparatus and exposed with their front surfaces kept constantly wet.

The coating composition of Example 1, 5, 6, 9, 12, or 16 or Comparative Example 5 was applied to the topcoat coating film subjected to the water spray exposure for 30 days using an applicator (gap: 0.1 mm) and dried to form a test coating film having a thickness of 30 μm, thereby obtaining a test plate. The test plates were dried at 23°C for 1 week, and then the adhesiveness was evaluated. The evaluation method is the same as <Adhesiveness of old antifouling coating film - test coating film>.

The results of Test Method 2 are described in Table 5. In Table 5, only the composition information on the synthetic resin particles (A), the organic solvent (B), and the rubber component (C) in the coating composition is described.

Table 5

| | Example 1 | Example 5 | Example 9 | Comparative Example 5 | Example 12 | Example 6 | Example 16 |
|---|---|---|---|---|---|---|---|
| PRIMAL TX-100 | 42.1 | 42.1 | 42.1 | 40.0 | 42.1 | 49.5 | 40.0 |
| SB latex DL-612 | 7.1 | 7.1 | 7.1 | 6.7 | 7.1 | | 6.7 |
| BCA | 4.5 | | 8.0 | | 15.0 | 4.5 | 2.0 |
| DPnB | | 4.5 | | | | | |
| TEX | | | | 2.0 | | | |
| Test Method 2 Evaluation | 5 | 5 | 5 | 1 | 5 | 5 | 5 |

Reference Signs List

1 Laminated coating film

2 Substrate with laminated coating film

10 Old coating film

20 Binder layer

30 New coating film

40 Substrate

## Claims

**1.** A waterborne coating composition comprising:

synthetic resin particles (A);
an organic solvent (B) having an aqueous solubility of more than or equal to 1.0 (g/100 g of water) and a boiling point of higher than or equal to 200°C; and
water, wherein
a content ratio of the organic solvent (B) in the composition is 1 to 16% by mass, and
the composition is a composition for application to a surface of a (meth)acrylic resin-based coating film.

**2.** The waterborne coating composition according to claim 1, wherein

the composition further comprises a rubber component (C), and
the rubber component (C) includes a structural unit derived from butadiene.

**3.** The waterborne coating composition according to claim 2, wherein a content ratio of the structural unit derived from butadiene in the rubber component (C) is 25% by mass or more.

**4.** The waterborne coating composition according to claim 1, wherein the synthetic resin particles (A) are at least one selected from (meth)acrylic resin particles and epoxy resin particles.

**5.** The waterborne coating composition according to claim 2, wherein when the total content of the synthetic resin particles (A) and the rubber component (C) is 100 parts by mass, a content of the synthetic resin particles (A) is 60 to 95 parts by mass, and a content of the rubber component (C) is 5 to 40 parts by mass.

**6.** The waterborne coating composition according to claim 1, wherein a content ratio of the water in the composition is 20 to 60% by mass.

**7.** The waterborne coating composition according to claim 1, wherein the (meth)acrylic resin-based coating film is an antifouling coating film.

**8.** The waterborne coating composition according to claim 7, wherein the antifouling coating film is a hydrolyzable antifouling coating film or a hydration-degradable antifouling coating film.

**9.** The waterborne coating composition according to claim 7, wherein the antifouling coating film is an antifouling coating film provided on at least one selected from a ship bottom outer plate, an underwater structure, and a fishing material.

**10.** The waterborne coating composition according to claim 1, wherein the (meth)acrylic resin-based coating film is a topcoat coating film.

**11.** A combination of:

an article comprising a (meth)acrylic resin-based coating film; and
the waterborne coating composition according to any one of claims 1 to 10 for application to a surface of the (meth) acrylic resin-based coating film.

**12.** A substrate with a laminated coating film, comprising:

a substrate;
a first (meth)acrylic resin-based coating film provided on the substrate;
a binder layer formed from the waterborne coating composition according to any one of claims 1 to 10; and
a second (meth)acrylic resin-based coating film, in this order.

**13.** The substrate with a laminated coating film according to claim 12, wherein

the first (meth)acrylic resin-based coating film is an antifouling coating film, and
the second (meth)acrylic resin-based coating film is an antifouling coating film for repair.

**14.** The substrate with a laminated coating film according to claim 12, wherein

the first (meth)acrylic resin-based coating film is a topcoat coating film, and
the second (meth)acrylic resin-based coating film is a topcoat coating film for repair.

**15.** A method for producing a substrate with a repaired coating film, comprising:

a step of forming a binder layer by applying the waterborne coating composition according to any one of claims 1 to 10 to a surface of a first (meth)acrylic resin-based coating film of a substrate with a coating film to be repaired, the substrate comprising a substrate and the first (meth)acrylic resin-based coating film provided on the substrate; and
a step of forming a second (meth)acrylic resin-based coating film on the binder layer.

[Fig. 1]

1
30
20
10

[Fig. 2]

2
30
20
10
1
40

**INTERNATIONAL SEARCH REPORT**

International application No. **PCT/JP2024/036859**

**A. CLASSIFICATION OF SUBJECT MATTER**

***C09D 133/00***(2006.01)i; ***B05D 1/36***(2006.01)i; ***B05D 5/00***(2006.01)i; ***B05D 7/24***(2006.01)i; ***C09D 5/02***(2006.01)i; ***C09D 5/16***(2006.01)i; ***C09D 7/20***(2018.01)i; ***C09D 109/00***(2006.01)i; ***C09D 163/00***(2006.01)i

FI: C09D133/00; C09D5/02; C09D163/00; C09D109/00; C09D7/20; C09D5/16; B05D1/36 Z; B05D7/24 302P; B05D7/24 302Q; B05D7/24 303E; B05D7/24 302U; B05D5/00 H

According to International Patent Classification (IPC) or to both national classification and IPC

**B. FIELDS SEARCHED**

Minimum documentation searched (classification system followed by classification symbols)

C09D; B05D; B32B

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2022-101985 A (SEIKO EPSON CORPORATION) 07 July 2022 (2022-07-07) entire text | 1-15 |
| A | WO 2020/022431 A1 (CHUGOKU MARINE PAINTS, LTD.) 30 January 2020 (2020-01-30) entire text | 1-15 |
| A | JP 2020-41060 A (DAICEL CORP.) 19 March 2020 (2020-03-19) entire text | 1-15 |
| A | JP 2022-527626 A (EMERALD KALAMA CHEMICAL, LLC) 02 June 2022 (2022-06-02) entire text | 1-15 |
| A | JP 2011-207046 A (SUMITOMO CHEMICAL COMPANY, LIMITED) 20 October 2011 (2011-10-20) entire text | 1-15 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 November 2024** | **17 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No.
PCT/JP2024/036859

C. DOCUMENTS CONSIDERED TO BE RELEVANT

| Category* | Citation of document, with indication, where appropriate, of the relevant passages | Relevant to claim No. |
|---|---|---|
| A | JP 2013-86273 A (SUMITOMO CHEMICAL COMPANY, LIMITED) 13 May 2013 (2013-05-13) entire text | 1-15 |
| P, A | CN 117384522 A (QINGDAO HAITAI KERUI CHEMICAL TECHNOLOGY CO., LTD.) 12 January 2024 (2024-01-12) entire text | 1-15 |

Form PCT/ISA/210 (second sheet) (July 2022)

**INTERNATIONAL SEARCH REPORT**
**Information on patent family members**

International application No.
**PCT/JP2024/036859**

| Patent document cited in search report | Publication date (day/month/year) | Patent family member(s) | Publication date (day/month/year) |
|---|---|---|---|
| JP 2022-101985 A | 07 July 2022 | US 2022/0204791 A1<br>claim 1, examples<br>CN 114686043 A | |
| WO 2020/022431 A1 | 30 January 2020 | EP 3831898 A1<br>entire text<br>CN 112513207 A<br>KR 10-2021-0024066 A | |
| JP 2020-41060 A | 19 March 2020 | US 2020/0079972 A1<br>entire text<br>CN 110885609 A | |
| JP 2022-527626 A | 02 June 2022 | US 2022/0041871 A1<br>entire text<br>WO 2020/206296 A1<br>EP 3946249 A1<br>CN 113811287 A<br>KR 10-2022-0005479 A | |
| JP 2011-207046 A | 20 October 2011 | (Family: none) | |
| JP 2013-86273 A | 13 May 2013 | (Family: none) | |
| CN 117384522 A | 12 January 2024 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP S5673578 A
- JP S523631 A
- JP 2016180051 A
- JP 2018044162 A
- JP 2019056064 A
- JP 2021155719 A